# EUROPEAN PATENT SPECIFICATION

(11) **EP 3 009 399 B1**
(45) Date of publication and mention of the grant of the patent: **28.02.2018**
(21) Application number: 14810601.6
(22) Date of filing: 12.06.2014
(51) Int. Cl.: C01B 33/40, B01J 20/16, C01B 33/46, C01B 39/02, H01B 1/00, H01B 5/00, H01M 4/139, H01M 4/62, B01J 20/20, B01J 20/32, C01B 33/26, H01B 1/08, H01B 1/14, H01M 10/0525

(54) **ALUMINUM SILICATE COMPOSITE, ELECTROCONDUCTIVE MATERIAL, ELECTROCONDUCTIVE MATERIAL FOR LITHIUM ION SECONDARY BATTERY, COMPOSITION FOR FORMING NEGATIVE ELECTRODE FOR LITHIUMION SECONDARY BATTERY, COMPOSITION FOR FORMING POSITIVE ELECTRODE FOR LITHIUM ION SECONDARY BATTERY, NEGATIVE ELECTRODE FOR LITHIUM ION SECONDARY CELL, POSITIVE ELECTRODE FOR LITHIUM ION SECONDARY CELL, AND LITHIUM ION SECONDARY CELL**
ALUMINIUMSILIKAT-VERBUNDMATERIAL, ELEKTRISCH LEITFÄHIGES MATERIAL, ELEKTRISCH LEITFÄHIGES MATERIAL FÜR LITHIUM-IONEN-SEKUNDÄRZELLEN, ZUSAMMENSETZUNG ZUR BILDUNG VON NEGATIVELEKTRODEN FÜR LITHIUM-IONEN-SEKUNDÄRZELLEN, ZUSAMMENSETZUNG ZUR BILDUNG VON POSITIVELEKTRODEN FÜR LITHIUM-IONEN-SEKUNDÄRZELLEN, NEGATIVELEKTRODE FÜR LITHIUM-IONEN-SEKUNDÄRZELLEN, POSITIVELEKTRODE FÜR LITHIUM-IONEN-SEKUNDÄRZELLEN UND LITHIUM-IONEN-SEKUNDÄRZELLE
COMPONSITE DE SILICATE D'ALUMINIUM, MATÉRIAU ÉLECTROCONDUCTEUR, MATÉRIAU ÉLECTROCONDUCTEUR POUR UNE BATERRIE RECHARGEABLE AU LITHIUM-ION, COMPOSITION POUR FORMER UNE ÉLECTRODE NÉGATIVE D'UNE BATTERIE RECHARGEABLE AU LITHIUM-ION, COMPOSITION POUR FORMER UNE ÉLECTRODE POSITIVE D'UNE BATTERIE RECHARGEABLE AU LITHIUM-ION, ÉLECTRODE NÉGATIVE POUR UNE BATTERIE RECHARGEABLE AU LITHIUM-ION, ÉLECTRODE POSITIVE POUR UNE BATTERIE RECHARGEABLE AU LITHIUM-ION, ET BATTERIE RECHARGEABLE AU LITHIUM-ION

(30) Priority: 12.06.2013 JP 2013124100; 12.06.2013 JP 2013124101; 23.04.2014 JP 2014089155
(43) Date of publication of application: 20.04.2016
(73) Proprietor: Hitachi Chemical Co., Ltd., Chiyoda-ku Tokyo 100-6606 (JP)
(72) Inventor: MIKUNI, Hiroki, Tokyo 100-6606 (JP); KODATO, Katsunori, Tokyo 100-6606 (JP); ISHII, Yoshito, Tokyo 100-6606 (JP)
(74) Representative: Hoffmann Eitle
(86) International application number: PCT/JP2014/065612
(87) International publication number: WO 2014/200063

(56) References cited:
- WO-A2-2011/156925
- CN-A- 103 055 806
- JP-A- H0 679 171
- JP-A- S60 186 414
- JP-A- 2005 099 183
- JP-A- 2005 317 266
- JP-A- 2010 208 872
- JP-B2- 4 761 725
- US-A1- 2009 136 809
- US-A1- 2012 009 344
- SAKATA Y. ET AL.: "Improvement in Adsorption Capacity of Nitrogen over X-type Zeolites", CHEMISTRY LETTERS, vol. 1, 1 January 1994 (1994-01-01), pages 5-8, XP008181921,

## Description

### Technical Field

The present invention relates to an aluminum silicate composite, an electroconductive material, an electroconductive material for a lithium ion secondary battery, a composition for forming a negative electrode for a lithium ion secondary battery, a composition for forming a positive electrode for a lithium ion secondary battery, a negative electrode for a lithium ion secondary battery, a positive electrode for a lithium ion secondary battery, and a lithium ion secondary battery.

### Background Art

Aluminum silicates such as zeolite are widely used as an adsorption agent for harmful contaminants, a water purifying agent, a malodor removing agent, and the like, for an excellent adsorption capacity thereof Aluminum silicates have an advantage in terms of adsorbing water by hydroxy groups on a surface thereof, but also have a problem in that they are difficult to disperse in a nonaqueous solvent or an organic solvent. Modifying a surface of an aluminum silicate is an exemplary method for dispersing the same in a nonaqueous solvent or an organic solvent. Specifically, for example, a method in which a surface of an aluminum silicate is modified with a solvent molecule via a supercritical treatment has been proposed (see, for example, Japanese Patent No. 4161048 and Japanese Patent No. 4161049). Further, a method in which a surface of an aluminum silicate is modified with a water-soluble polymer has been proposed (see, for example, Japanese Patent No. 4133550).

Regarding materials to be used for producing an electrode for a nickel hydrogen secondary battery, a lithium ion secondary battery, a fuel cell, a capacitor and the like, a technique of adding a carbon material, such as carbon black (for example, acetylene black) and graphite, to a positive electrode material or a negative electrode material as a conductivity aid for improving electrical conductivity of a positive electrode active material in a positive electrode, or for improving charge-and-discharge characteristics of a negative electrode (see, for example, Japanese Patent Application Laid-Open (JP-A) No.2011-181229). When an impurity (magnetic impurity such as Fe, Ni and Cu) exists in a material that constitutes a battery, it may cause a short circuit. Further, deterioration of battery performances may be caused by elution of metal elements from an electrode. Therefore, studies have been made on a capture agent or an adsorption agent for impurities (hereinafter, also simply referred to as an "adsorption agent") and on a technique for stabilizing a positive electrode (see, for example, JP-A No. 2000-77103).

Since a lithium ion secondary battery is light in weight and high in input-output performances as compared to other types of secondary batteries, such as a nickel hydrogen battery and a lead accumulator battery, it has been drawing attention as a power source for performing input and output at high levels for an electric car, a hybrid electric car and the like. As electrodes for a lithium ion secondary battery, a positive electrode that includes a lithium compound containing Fe or Mn as a metal element as a positive electrode active material, and a negative electrode that includes a carbon material that is capable of absorbing and releasing lithium ions as a negative electrode active material, are used. In order to improve electrical conductivity of a positive electrode active material in a positive electrode, or to improve charge-and-discharge performances of a negative electrode, a technique of adding a carbon material, such as carbon black (for example, acetylene black) as a conductivity aid, to the positive electrode material or the negative electrode material (for example, refer to JP-A No. 2011-181229) is known. When an impurity (magnetic impurity, such as Fe, Ni, and Cu) exists in a material that constitutes a battery, it may deposit on a negative electrode upon charging and discharging. The impurity that has deposited on a negative electrode may pierce a separator and reach a positive electrode therethrough, thereby causing a short circuit. Further, the temperature of a lithium ion secondary battery may become between 40°C and 80°C when it is used for an automobile during summertime. In that case, deterioration of battery performances may be caused by elution of metal elements in a Li-containing metal oxide that constitutes a positive electrode. Therefore, studies have been made on a capture agent or an adsorption agent for impurities and on a technique for stabilizing a positive electrode (see, for example, JP-A No. 2000-77103). JP 4 761725 B2 teaches the preparation of cathode active material for a lithium ion secondary cell: 20 parts by mass of zeolite are mixed with 5 parts by mass of carbon. US 2012/009344 A1 discloses a carbonaceous composite material for use in a negative electrode constituent material of a lithium ion battery. In one embodiment a zeolite catalyst supporting carbon nanotubes is mixed with a carbonaceous material.

### SUMMARY OF THE INVENTION

### Technical Problem

In the methods of Japanese Patent No. 4161048 and Japanese Patent No. 4161049, a surface is modified with a solvent under a supercritical condition. Therefore, the kind of a modifying group is limited, and costs for installation of equipments are required. Further, in the method of Japanese Patent No. 4133550, an effect of reducing the amount of water adsorbed by an aluminum silicate is insufficientm since a water-soluble polymer has a hydroxy group in a side chain. Therefore, development of an aluminum silicate that has a low amount of water absorption has been desired. Further, there are increasing needs for improvements in electrical properties and battery lifetime characteristics of various batteries, including lithium ion secondary batteries. Accordingly, development of an electroconductive material that can impart superior electrical properties and lifetime characteristics of a battery is desired.

The invention aims to provide an aluminum silicate that has a low amount of water absorption, an electroconductive material that can impart superior electrical properties and lifetime characteristics to a battery, an electroconductive material for a lithium ion secondary battery that can impart superior electrical properties and lifetime characteristics to a lithium ion secondary battery, a composition for forming a negative electrode for a lithium ion secondary battery that includes the electroconductive material for a lithium ion secondary battery, a composition for forming a positive electrode for a lithium ion secondary battery, a lithium ion secondary battery negative electrode and a lithium ion secondary battery positive electrode, and a lithium ion secondary battery having the lithium ion secondary battery negative electrode or the lithium ion secondary battery positive electrode.

### Solution to Problem

The invention is as disclosed in the claims. Furthermore the following items are disclosed.
<1> An aluminum silicate composite that comprises an aluminum silicate and carbon that is disposed on a surface of the aluminum silicate.
<2> The aluminum silicate composite according to <1>, wherein a content of the carbon is from 0.1 mass% to 50 mass%.
<3> The aluminum silicate composite according to <1> or <2>, wherein an R value obtained from Raman spectrum analysis is from 0.1 to 5.0.
<4> The aluminum silicate composite according to any one of <1> to <3>, wherein an element molar ratio Si/Al, of silicon (Si) to aluminum (Al), is from 0.1 to 500.
<5> An electroconductive material including an aluminum silicate composite that comprises an aluminum silicate and carbon that is disposed on a surface of the aluminum silicate.
<6> The electroconductive material according to <5>, wherein a content of the carbon in the aluminum silicate composite is from 0.1 mass% to 50 mass%.
<7> The electroconductive material according to <5> or <6>, wherein an R value obtained from Raman spectrum analysis of the aluminum silicate composite is from 0.1 to 5.0.
<8> The electroconductive material according to any one of <5> to <7>, wherein a powder resistivity of the aluminum silicate composite is from 0.001 Ω ▪ cm to 100 Ω ▪ cm.
<9> The electroconductive material according to any one of <5> to <8>, wherein an element molar ratio Si/Al, of silicon (Si) to aluminum (Al), of the aluminum silicate composite is from 0.1 to 500.
<10> An electroconductive material for a lithium ion secondary battery, the electroconductive material comprising an aluminum silicate composite that comprises an aluminum silicate and carbon that is disposed on a surface of the aluminum silicate.
<11> The electroconductive material for a lithium ion secondary battery according to <10>, wherein a content of the carbon in the aluminum silicate composite is from 0.1 mass% to 50 mass%.
<12> The electroconductive material for a lithium ion secondary battery according to <10> or <11>, wherein an R value that is obtained from Raman spectrum analysis of the aluminum silicate composite is from 0.1 to 5.0.
<13> The electroconductive material for a lithium ion secondary battery according to any one of <10> to <12>, wherein a powder resistivity of the aluminum silicate composite is from 0.001 Ω ▪ cm to 100 Ω ▪ cm.
<14> The electroconductive material for a lithium ion secondary battery according to any one of <10> to <13>, wherein an element molar ratio Si/Al, of silicon (Si) to aluminum (Al), of the aluminum silicate composite is from 0.1 to 500.
<15> A composition for forming a negative electrode for a lithium ion secondary battery, the composition comprising the electroconductive material for a lithium ion secondary battery according to any one of <10> to <14>, a negative electrode active material, and a binder.
<16> A composition for forming a positive electrode for a lithium ion secondary battery, the composition comprising the electroconductive material for a lithium ion secondary battery according to any one of <10> to <14>, a positive electrode active material, and a binder.
<17> A negative electrode for a lithium ion secondary battery, the negative electrode comprising a current collector and a negative electrode layer that is disposed on the current collector, the negative electrode layer comprising the electroconductive material for a lithium ion secondary battery according to any one of <10> to <14> and a negative electrode active material.
<18> A positive electrode for a lithium ion secondary battery, the positive electrode comprising a current collector and a positive electrode layer that is disposed on the current collector, the positive electrode layer comprising the electroconductive material for a lithium ion secondary battery according to any one of <10> to <14> and a positive electrode active material.
<19> A lithium ion secondary battery that comprises at least one of the negative electrode for a lithium ion secondary battery according to <17> or the positive electrode for a lithium ion secondary battery according to <18>.

### Effects of the Invention

According to the invention, it is possible to provide an aluminum silicate that has a low amount of water absorption, an electroconductive material that can impart superior electrical properties and lifetime characteristics to a battery, an electroconductive material for a lithium ion secondary battery that can impart superior electrical properties and lifetime characteristics to a lithium ion secondary battery, a composition for forming a negative electrode for a lithium ion secondary battery that includes the electroconductive material for a lithium ion secondary battery, a composition for forming a positive electrode for a lithium ion secondary battery, a lithium ion secondary battery negative electrode and a lithium ion secondary battery positive electrode, and a lithium ion secondary battery having the lithium ion secondary battery negative electrode or the lithium ion secondary battery positive electrode.

### BRIEF DESCRIPTION OF DRAWINGS

Fig. 1 is ²⁷Al-NMR spectra of aluminum silicates according to Production Example 1 and Production Example 2.
Fig. 2 is ²⁹Si-NMR spectra of aluminum silicates according to Production Example 1 and Production Example 2.
Fig. 3 is powder X-ray diffraction spectra of aluminum silicates according to Production Example 1 and Production Example 2.
Fig. 4 is a transmission electron photomicrograph (TEM) of an aluminum silicate according to Production Example 1.
Fig. 5 is a transmission electron photomicrograph (TEM) of an aluminum silicate according to Production Example 2.
Fig. 6 is a schematic diagram showing a tubular imogolite as an exemplary aluminum silicate.
Fig. 7 is a schematic cross-sectional view showing an example of the structure of an aluminum silicate composite.
Fig. 8 is a schematic cross-sectional view showing an example of the structure of an aluminum silicate composite.
Fig. 9 is a schematic cross-sectional view showing an example of the structure of an aluminum silicate composite.
Fig. 10 is a schematic cross-sectional view showing an example of the structure of an aluminum silicate composite.
Fig. 11 is a schematic cross-sectional view showing an example of the structure of an aluminum silicate composite.
Fig. 12 is powder X-ray diffraction spectra of respective samples according to the Examples.
Fig. 13 is a graph showing evaluation results of metal (Mn) ion adsorption capacities in an electrolytic solution of respective samples according to the Examples.
Fig. 14 is a graph showing evaluation results of charge-and-discharge performances of Sample A and Sintered product A according to the Examples.
Fig. 15 is a graph showing evaluation results of charge-and-discharge performances of imogolite composite A, imogolite composite B and acetylene black according to the Examples.

### DESCRIPTION OF EMBODIMENTS

The term "process" includes herein not only an independent process, but also a process that is not clearly distinguished from a different process, insofar as an intended purpose of the process can be attained. A numerical range expressed by "x to y" herein includes x and y in the range as the minimum and maximum values, respectively. When there are plural substances that correspond to a component in a composition, the content of the component refers to a total content of the substances, unless otherwise specified.

### <Aluminum silicate composite>

The aluminum silicate composite according to the invention is an aluminum silicate composite that includes an aluminum silicate and carbon that is disposed on a surface of the aluminum silicate. Having a structure as described above, the aluminum silicate composite is capable of reducing the amount of water adsorption, as compared to an aluminum silicate that does not have carbon on its surface.

An aluminum silicate, in an aluminum silicate composite, is an oxide salt including aluminum (Al) and silicon (Si). Since the valences of Si and Al are different, an oxide salt of Si and Al has a large number of OH groups, and the OH groups have an ion-exchange capacity. Therefore, an aluminum silicate has a large number of adsorption sites for adsorbing metal ions per unit mass, and also has an ability of adsorbing metal ions in a highly selective manner, due to its high specific surface area. In addition, an aluminum silicate composite tends to be more likely to adsorb metal ions such as nickel ions, manganese ions, cobalt ions, copper ions and iron ions, as compared to lithium ions, sodium ions and the like. The aluminum silicate composite according to the invention can reduce the water adsorption amount without impairing an ability of adsorbing metal ions and a selectivity for adsorption.

Among the aluminum silicate composites, the element molar ratio Si/Al, of silicon (Si) to aluminum (Al), of the aluminum silicate composite is preferably from 0.1 to 500 in view of metal ion adsorption capacity and metal ion selectivity, more preferably from 0.3 to 100, and further preferably from 0.3 to 50.

Since an aluminum silicate is an inorganic oxide, it exhibits excellent thermal stability and stability in a solvent. Therefore, the aluminum silicate can exist in a stable manner in an environment in which the temperature increases during use, for example, in an air purification filter, a water treatment material, a light absorption film, an electromagnetic wave shield film, a semiconductor encapsulation material, and an electronic component material.

In the specification, metal ions that are less likely to be adsorbed by the aluminum silicate composite, such as nickel ions, manganese ions, cobalt ions, copper ions and iron ions, may be referred to as "unnecessary metal ions".

Since the aluminum silicate composite according to the invention is lower in water adsorption amount than an aluminum silicate not having carbon on its surface, the aluminum silicate composite is more likely to disperse in a nonaqueous solvent or an organic solvent than an aluminum silicate not having carbon on its surface. Therefore, the aluminum silicate composite can be suitably used for various applications in which the aluminum silicate is used in a dispersed form in a nonaqueous solvent or an organic solvent. Further, the aluminum silicate composite can be suitably used for various applications in which the existence of water needs to be as low as possible, due to its low water adsorption amount. Since the water adsorption amount of the aluminum silicate composite is reduced by positioning carbon on its surface, while maintaining an ion-exchange capacity due to Si and Al, it can be suitably used as a component of an air purification filter, a water treatment material, a light absorption film, an electromagnetic wave shield film, a semiconductor encapsulation material, and an electronic component material, for example.

### <Electroconductive material>

The electroconductive material according to the invention includes an aluminum silicate composite that includes an aluminum silicate and carbon disposed on a surface of the aluminum silicate. The electroconductive material according to the invention, having a structure as specified above, can improve electrical properties and lifetime characteristics of a battery.

The aluminum silicate included in the electroconductive material is an oxide salt that includes aluminum (Al) and silicon (Si). Since the valences of Si and Al are different, an oxide salt of Si and Al has a large number of OH groups, and the OH groups exhibit an ion-exchange capacity. Therefore, an aluminum silicate has a large number of adsorption sites for metal ions per unit mass, and is capable of adsorbing metal ions in a highly selective manner due to its high specific surface area. An aluminum silicate composite tends to be more likely to adsorb unnecessary metal ions such as nickel ions, manganese ions, cobalt ions, copper ions and iron ions, as compared to lithium ions, sodium ions and the like. The unnecessary metal ions derive from impurity ions that exist in a component of a battery, or metal ions eluting from a positive electrode at high temperature, for example.

Among the aluminum silicate composites, the element molar ratio Si/Al, of silicon (Si) to aluminum (Al), of an aluminum silicate composite is preferably from 0.1 to 500 in view of metal ion adsorption capacity and metal ion selectivity, more preferably from 0.3 to 100, and further preferably from 0.3 to 50.

The aluminum silicate composite has a structure in which carbon is disposed on a surface of an aluminum silicate, and the carbon imparts electrical conductivity to the aluminum silicate composite. Further, since an aluminum silicate is an inorganic oxide, it exhibits an excellent thermal stability and an excellent stability in a solvent. Accordingly, the electroconductive material according to the invention improves battery electrical properties and battery lifetime characteristics, by its ion-exchange capacity due to Si and Al and its electrical conductivity due to carbon of the aluminum silicate composite.

The electroconductive material according to the invention may include an optional component, in addition to the aluminum silicate composite. There is no particular restriction on the component that may be included in the electroconductive material, insofar as it can be generally included in an electroconductive material. Examples of the component that may be included in the electroconductive material include carbon black, graphite, acetylene black, an oxide that exhibits electrical conductivity, and a nitride that exhibits electrical conductivity. An electroconductive material according to the invention preferably includes acetylene black, from a viewpoint of improving handleability as a slurry.

The electroconductive material according to the invention is suitably used in an application that requires both ion-exchange capacity and electrical conductivity. Examples of the application include a fuel cell, a capacitor, an electroconductive film, an electronic component material, and a battery material.

### <Electroconductive material for lithium ion secondary battery>

The electroconductive material for a lithium ion secondary battery according to the invention includes an aluminum silicate composite that includes an aluminum silicate and carbon that is disposed on a surface of the aluminum silicate. The electroconductive material for a lithium ion secondary battery according to the invention, having a structure as specified above, can improve electrical properties and lifetime characteristics of a lithium ion secondary battery.

The aluminum silicate included in the electroconductive material for a lithium ion secondary battery is an oxide salt that includes aluminum (Al) and silicon (Si). Since the valences of Si and Al are different, an oxide salt of Si and Al has a large number of OH groups, and the OH groups exhibits an ion-exchange capacity. Therefore, an aluminum silicate has a large number of adsorption sites for metal ions per unit mass, and has an ability of adsorbing metal ions in a highly selective manner for its high specific surface area. An aluminum silicate composite tends to be more likely to adsorb unnecessary metal ions, i.e., transition metal ions such as nickel ions, manganese ions, cobalt ions, copper ions, and iron ions, as compared to alkali metal ions such as lithium ions and sodium ions. The unnecessary metal ion derive from impurity ions in a component of a lithium ion secondary battery, or metal ions eluting from a positive electrode at high temperature, for example.

Among the aluminum silicate composites, the element molar ratio Si/Al, of silicon (Si) to aluminum (Al), of an aluminum silicate composite is preferably from 0.1 to 500 in view of metal ion adsorption capacity and metal ion selectivity, more preferably from 0.3 to 100, and further preferably from 0.3 to 50.

The aluminum silicate composite according to the invention has a structure in which carbon is disposed on a surface of an aluminum silicate, and the carbon imparts the aluminum silicate salt with electrical conductivity. Further, since an aluminum silicate is an inorganic oxide, it exhibits an excellent thermal stability and an excellent stability in a solvent. Therefore, the electroconductive material for a lithium ion secondary battery according to the invention can improve electrical properties and lifetime characteristics of a lithium ion secondary battery by the ion-exchange capacity due to Si and Al and the electrical conductivity due to carbon of the aluminum silicate composite.

The electroconductive material for a lithium ion secondary battery according to the invention may include an optional component, in addition to the aluminum silicate composite. There is no particular restriction on the component that can be included in the electroconductive material for a lithium ion secondary battery, insofar as it is a component that can be generally included in an electroconductive material for a lithium ion secondary battery. Examples of the component that can be included in the electroconductive material for a lithium ion secondary battery include carbon black, graphite, acetylene black, an oxide that exhibits electrical conductivity, and a nitride that exhibits electrical conductivity. The electroconductive material for a lithium ion secondary battery according to the invention preferably includes acetylene black from a viewpoint of improving handleability as a slurry.

### <Composition for forming negative electrode for lithium ion secondary battery >

The composition for forming a negative electrode for a lithium ion secondary battery according to the invention includes the electroconductive material for a lithium ion secondary battery, a negative electrode active material, and a binder. The composition for forming a negative electrode for a lithium ion secondary battery according to the invention may further include a solvent, a thickener, a conductivity aid and the like.

There is no particular restriction on the content of the aluminum silicate composite in the composition for forming a negative electrode for a lithium ion secondary battery, and the content may be from 0.1 mass% to 30 mass% with respect to the total amount of the composition for forming a negative electrode for a lithium ion secondary battery, excluding a solvent that is optionally used, preferably from 0.3 mass% to 20 mass%, and more preferably from 0.5 mass% to 10 mass%.

As a negative electrode active material, materials that are generally used for a negative electrode of a lithium ion secondary battery may be utilized. Examples of the negative electrode active material include a material capable of doping or intercalating lithium ions, such as a carbon material, a metallic compound, a metallic oxide, a metallic sulfide, and an electrically conductive polymer material. More specifically, the examples include natural graphite, artificial graphite, silicon and lithium titanate. The negative electrode active material may be used singly or as a combination of two or more kinds.

There is no particular restriction on a binder, and examples thereof include a styrene-butadiene copolymer; a (meth)acrylic copolymer obtained by copolymerizing an ethylenic unsaturated carboxylic acid ester (such as methyl (meth)acrylate, ethyl (meth)acrylate, butyl (meth)acrylate, (meth)acrylonitrile and hydroxyethyl (meth)acrylate) with an ethylenic unsaturated carboxylic acid (such as acrylic acid, methacrylic acid, itaconic acid, fumaric acid and maleic acid); and a polymer such as poly(vinylidene fluoride), poly(ethylene oxide), polyepichlorohydrin, polyphosphazene, polyacrylonitrile, polyimide and polyamide-imide. In the specification, the expression "(meth)acrylate" refers to "acrylate" or "methacrylate" corresponding thereto. The same applies also to a similar expression such as a "(meth)acrylic copolymer".

There is no particular restriction on a solvent and examples include N-methylpyrrolidone, dimethylacetamide, dimethylformamide and γ-butyrolactone.

There is no particular restriction on a thickener, and examples include carboxymethylcellulose, methylcellulose, hydroxymethylcellulose, ethylcellulose, poly(vinyl alcohol), poly(acrylic acid) (salt), oxidized starch, phosphorylated starch and casein.

There is no particular restriction on a conductivity aid, and examples include carbon black, graphite, acetylene black, an oxide that exhibits electrical conductivity, and a nitride that exhibits electrical conductivity. The conductivity aids may be used singly or as a combination of two or more kinds.

### <Composition for forming positive electrode for lithium ion secondary battery>

The composition for forming a positive electrode for a lithium ion secondary battery according to the invention includes the electroconductive material for a lithium ion secondary battery, a positive electrode active material, and a binder. The composition for forming a positive electrode for a lithium ion secondary battery according to the invention may further include a solvent, a thickener, a conductivity aid and the like.

There is no particular restriction on the content of the aluminum silicate composite in the composition for forming a positive electrode for a lithium ion secondary battery, and the content may be, for example, from 0.1 mass% to 30 mass% with respect to the total amount of the composition for forming a positive electrode for a lithium ion secondary battery, excluding a solvent that is optionally included, preferably from 0.3 mass% to 20 mass%, and more preferably from 0.5 mass% to 10 mass%.

As a positive electrode active material, materials that are generally used for a positive electrode for a lithium ion secondary battery can be used. The positive electrode active material may be a compound capable of doping or intercalating lithium ions, and examples include a lithium cobalt oxide (LiCoO₂), a lithium nickel oxide (LiNiO₂), a lithium manganese oxide (LiMnO₂), and a lithium nickel manganese cobalt oxide (Li(NiMnCo)O₂).

Examples of a binder for the composition for forming a positive electrode for a lithium ion secondary battery include the binders as described above regarding the composition for forming a negative electrode for a lithium ion secondary battery. Examples of a solvent, a thickener, and a conductivity aid that may be added to the composition for forming a positive electrode for a lithium ion secondary battery include those as described above regarding the composition for forming a negative electrode for a lithium ion secondary battery.

### <Negative electrode for lithium ion secondary battery negative electrode>

The negative electrode for a lithium ion secondary battery according to the invention (hereinafter, also referred to as a "negative electrode") includes a current collector and a negative electrode layer. The negative electrode layer is disposed on the current collector and includes the electroconductive material for a lithium ion secondary battery and a negative electrode active material.

For example, the lithium ion secondary battery negative electrode according to the invention can be obtained by preparing the composition for forming a negative electrode for a lithium ion secondary battery, applying the composition for forming a negative electrode for a lithium ion secondary battery to a current collector, removing a solvent that is optionally included in the composition, and performing compression to form a negative electrode layer. Generally, the composition for forming a negative electrode for a lithium ion secondary battery is kneaded and formed into the shape of a sheet, pellets or the like.

In a case in which the negative electrode for a lithium ion secondary battery according to the invention is produced by using the composition for forming a negative electrode for a lithium ion secondary battery, the negative electrode layer of the negative electrode contains a binder.

There is no particular restriction on the material of the current collector, and examples thereof include aluminum, copper, nickel, titanium, stainless steel, a porous metal (metal foam) and a carbon paper. There is no particular restriction on the shape of the current collector, and examples thereof include a foil, a perforated foil, and a mesh.

There is no particular restriction on the method for applying the composition for forming a negative electrode for a lithium ion secondary battery onto the current collector, and examples thereof include a metal mask printing method, an electrostatic coating method, a dip coating method, a spray coating method, a roll coating method, a doctor blade method, a gravure coating method, and a screen printing method. After the application, pressing is preferably performed as necessary, with a flat plate, a calendar roll or the like. Integration of the composition for forming a negative electrode for a lithium ion secondary battery that has been formed into a sheet, pellets or the like with the current collector may be performed by rolling, pressing, a combination of rolling and pressing, or the like.

The negative electrode layer that is formed on the current collector, or the negative electrode layer that is integrated with the current collector, is preferably heat-treated according to the binder. For example, in a case of using a binder having polyacrylonitrile as a main skeleton, the negative electrode layer is preferably heat-treated at from 100°C to 180°C, and in a case of using a binder with polyimide or polyamide-imide as a main skeleton, the negative electrode layer is preferably heat-treated at from 150°C to 450°C. By performing the heat treatment, the strength is improved as a result of removing a solvent that is optionally used and curing the binder, and adherence between the negative electrode materials, and adherence between the negative electrode material and the current collector, tends to increase. The heat treatment is preferably carried out in an inert atmosphere of helium, argon, nitrogen or the like, or in a vacuum atmosphere, in order to prevent oxidation of the current collector during the treatment.

The negative electrode is preferably subjected to pressing (pressure application treatment) before the heat treatment. By performing the pressure treatment, the electrode density can be adjusted. In the negative electrode for a lithium ion secondary battery according to the invention, the electrode density is preferably from 1.4 g/cm³ to 1.9 g/cm³, more preferably from 1.5 g/cm³ to 1.85 g/cm³, and further preferably from 1.6 g/cm³ to 1.8 g/cm³. The higher the electrode density is, the greater the volumetric capacity of the negative electrode tends to be, and the stronger the adherence between the negative electrode materials, and the adherence between the negative electrode material and the current collector, tends to be.

### <Positive electrode for lithium ion secondary battery positive electrode>

The positive electrode for a lithium ion secondary battery according to the invention (hereinafter, also referred to as a "positive electrode") includes a current collector and a positive electrode layer. The positive electrode layer is disposed on the current collector and includes the electroconductive material for a lithium ion secondary battery and a positive electrode active material.

Examples of the current collector of a lithium ion secondary battery positive electrode include the current collector as described above regarding the lithium ion secondary battery negative electrode. The lithium ion secondary battery positive electrode can be produced by a method similar to the production method of the lithium ion secondary battery negative electrode, provided that the composition for forming a negative electrode for a lithium ion secondary battery is replaced with the composition for forming a positive electrode for a lithium ion secondary battery.

### <Lithium ion secondary battery>

The lithium ion secondary battery according to the invention includes at least one of the negative electrode for a lithium ion secondary battery or the positive electrode for a lithium ion secondary battery. When a negative electrode other than the negative electrode for a lithium ion secondary battery as described above is used, an ordinary negative electrode used for a lithium ion secondary battery may be applied. When a positive electrode other than the positive electrode for a lithium ion secondary battery as described above is used, an ordinary positive electrode for a lithium ion secondary battery may be applied. A negative electrode and a positive electrode are disposed so as to face each other, for example, via a separator disposed between the electrodes, and a lithium ion secondary battery can be produced by infusing an electrolytic solution containing an electrolyte.

There is no particular restriction on the electrolyte, and known ones may be used. For example, by using a solution prepared by dissolving an electrolytic substance in an organic solvent as the electrolyte, a nonaqueous lithium ion secondary battery can be produced.

Examples of the electrolyte include LiPF₆, LiClO₄, LiBF₄, LiClF₄, LiAsF₆, LiSbF₆, LiAlO₄, LiAlCl₄, LiN(CF₃SO₂)₂, LiN(C₂F₅SO₂)₂, LiC(CF₃SO₂)₃, LiCl, and LiI.

As a separator, known separators may be used. Specific examples thereof include a paper separator, a polypropylene separator, a polyethylene separator, and a glass fiber separator.

With regard to a production method of a lithium ion secondary battery, for example, a positive electrode and a negative electrode are rolled up with a separator inserted therebetween. The rolled-up assembly is inserted in a battery can, and a tab terminal that has been welded in advance to a current collector of the negative electrode is welded to the bottom of the battery can. An electrolytic solution is injected into the battery can, a tab terminal that has been welded in advance to a current collector of the positive electrode is welded to a battery cover, a cap is disposed on the upper part of the battery via an insulating gasket, and the portion at which the cap and the battery can are in contact with each other is tightly swaged, whereby a battery is prepared.

There is no particular restriction on the shape of the lithium ion secondary battery according to the invention, examples include a paper battery, a button battery, a coin battery, a laminate battery, a cylindrical battery, a prismatic battery and the like.

### [Aluminum silicate]

The aluminum silicate according to the invention is an oxide salt that includes aluminum and silicon. An oxide salt that includes aluminum and silicon can exhibit an ion exchange capacity, as described above. There is no particular restriction on the aluminum silicate according to the invention, insofar as it is an oxide salt including aluminum and silicon, and the aluminum silicate may include a metal element other than aluminum or silicon. Examples of the aluminum silicate according to the invention include allophane, kaolin, zeolite, saponite, montmorillonite, attapulgite, and imogolite.

The volume average particle diameter of the aluminum silicate is preferably from 0.1 µm to 100 µm, in accordance with the final size of a desired aluminum silicate composite, more preferably from 0.5 µm to 50 µm, and further preferably from 1 µm to 30 µm. The volume average particle diameter of the aluminum silicate is measured by laser diffractometry, as described below.

The volume average particle diameter of the aluminum silicate is preferably from 0.1 µm to 100 µm, in accordance with the final size of a desired aluminum silicate composite, more preferably from 0.5 µm to 50 um, and further preferably from 1 µm to 30 µm. The volume average particle diameter of the aluminum silicate is measured by laser diffractometry. The laser diffractometry can be performed with a laser diffraction particle size distribution analyzer (for example, SALD-3000J, Shimadzu Corporation). Specifically, an aluminum silicate is dispersed in a dispersing medium such as water to prepare a dispersion, and a cumulative volume distribution curve is obtained with the dispersion using a laser diffraction particle size distribution analyzer. Then, a particle diameter (D50) at an accumulation of 50% from the smaller diameter side is calculated as a volume average particle diameter.

The BET specific surface area of the aluminum silicate is preferably 250 m²/g or more, and more preferably 280 m²/g or more, from a viewpoint of improving the metal ion adsorption capacity. When the BET specific surface area is 250 m²/g or more, the adsorption amount of unnecessary metal ions per unit mass is increased, and the efficiency is improved accordingly. As a result, a high effect tends to be achieved with a small amount of the aluminum silicate.

Although there is no particular restriction on the upper limit of the BET specific surface area of the aluminum silicate, the BET specific surface area is preferably 1500 m²/g or less, more preferably 1200 m²/g or less, and further preferably 1000 m²/g or less, from a viewpoint that part of Si and Al in the aluminum silicate form a bonding represented by Si-O-Al, and this bonding contributes to improvement of the metal ion adsorption capacity.

A BET specific surface area of the aluminum silicate is measured based on a nitrogen adsorption capacity according to JIS Z 8830 (2001). As an evaluation apparatus, a nitrogen adsorption analyzer (AUTOSORB-1, Quantachrome Instruments) and the like can be used. Prior to measuring a BET specific surface area, a pretreatment is performed for removing moisture by heating, in order to avoid a possible influence on a gas adsorption capacity by moisture adsorbed on a surface and in a structure of a sample.

In the pretreatment, a measurement cell filled with 0.05 g of a measurement sample is evacuated by a vacuum pump to a degree of 10 Pa or less, then heated at 110°C for a retention time of 3 hours or more, and then naturally cooled to normal temperature (25°C) while maintaining the vacuumed state. After performing the pretreatment, the measurement is carried out at an evaluation temperature of 77K and in an evaluation pressure range of less than 1, in terms of a relative pressure (an equilibrium pressure with respect to a saturated vapor pressure).

The total pore volume of the aluminum silicate is preferably 0.1 cm³/g or more, more preferably 0.12 cm³/g or more, and further preferably 0.15 cm³/g or more, from a viewpoint of improvement of the adsorption capacity for metal ions. There is no particular restriction on the upper limit of the total pore volume. The total pore volume is preferably 1.5 cm²/g or less, more preferably 1.2 cm²/g or less, and further preferably 1.0 cm²/g or less, from a viewpoint of suppressing the adsorption amount per unit mass of moisture in the air.

The total pore volume of the aluminum silicate is determined by converting, to a liquid value, a gas adsorption amount that is closest to a relative pressure 1 among the data obtained based on a BET specific surface area within a relative pressure range of not less than 0.95 and less than 1.

From a viewpoint that the ion radius of unnecessary metal ions are from 0.01 nm to 0.1 nm, the average pore diameter of the aluminum silicate is preferably 1.5 nm or more, and more preferably 2.0 nm or more. In a case in which the average pore diameter is within the range, the unnecessary metal ions can be adsorbed efficiently even when the ions migrate to adsorption sites while being accompanied with a ligand. Further, there is no particular restriction on the upper limit of the average pore diameter. The smaller the average pore diameter is, the greater the specific surface area tends to be. Therefore, the average pore diameter is preferably 50 nm or less, more preferably 20 nm or less, and further preferably 5.0 nm or less. The average pore diameter of the aluminum silicate is determined based on the BET specific surface area and the total pore volume, by assuming that all pores are formed by a single cylindrical pore.

In a case in which the aluminum silicate is used as a source material for an electroconductive material, the moisture content thereof is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method. As a method for adjusting the moisture content of the aluminum silicate to 10 mass% or less, a heat treatment method that is commonly used may be applied without particular restriction. For example, the moisture content of allophane can be adjusted to 10 mass% or less, by performing a heat treatment at an atmospheric pressure at from 100°C to 300°C, for from 6 hours to 24 hours.

### (Allophane)

In the specification, allophane refers to an amorphous aluminum silicate with an element molar ratio Si/Al of from 0.1 to 1.0, and to an aluminum silicate that is said to form a hollow sphere structure. Examples of allophane include an aluminum silicate having a composition expressed by nSiO₂ ▪ Al₂O₃ ▪ mH₂O [n = 1 to 2, m = 2.5 to 3].

The element molar ratio Si/Al, of silicon (Si) to aluminum (Al), of allophane is preferably from 0.2 to 1.0, and more preferably from 0.5 to 1.0. When the element molar ratio Si/Al is within the range, the ion-exchange capacity can be enhanced. The element molar ratio Si/Al can be determined by measuring the atomic concentrations of Si and Al, respectively, by an ordinary method with ICP emission spectroscopy (for example, by an ICP optical emission spectrophotometer: P-4010, Hitachi, Ltd.), and calculating the element molar ratio based on these values. The same method is used for the measurement of the element molar ratio as described below.

In a case in which allophane is used as a source material for an electroconductive material, the moisture content thereof is preferably 10 mass% or less, and more preferably 5 mass% or less. When the moisture content is 10 mass% or less, generation of a gas caused upon electrolysis tends to be more suppressed, and expansion of a battery tends to be more suppressed. The moisture content can be measured by a Karl-Fischer method. As a method for adjusting the moisture content of allophane to 10 mass% or less, a heat treatment method that is commonly used may be applied without particular restriction. For example, the moisture content of allophane can be adjusted to 10 mass% or less, by performing a heat treatment at an atmospheric pressure at from 100°C to 300°C, for from 6 hours to 24 hours.

Allophane may be a synthesized product or a commercial product. Examples of a commercial product of allophane include SECADO (product name, Shinagawa Chemicals Co., Ltd.)

### (Kaolin)

In the specification, kaolin refers to an aluminum silicate having a layered structure, and refers to an aluminum silicate formed of at least one of kaolinite, nacrite, dickite, halloysite, hydrated halloysite and the like. Examples of kaolin include an aluminum silicate having a composition expressed by Al₂SiO₅ ▪ (H₂O)₄ ▪ nH₂O [n = 0 to 5].

The element molar ratio Si/Al, of silicon (Si) to aluminum (Al), of kaolin is preferably from 0.1 to 2.0, and more preferably from 0.5 to 1.5. When the element molar ratio Si/Al is within the range, the ion-exchange capacity can be enhanced.

In a case in which kaolin is used as a source material for an electroconductive material, the moisture content thereof is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method. As a method for adjusting the moisture content of kaolin to 10 mass% or less, a heat treatment method that is commonly used may be applied without particular restriction. For example, the moisture content of kaolin can be adjusted to 10 mass% or less, by performing a heat treatment at an atmospheric pressure of from 100°C to 300°C, for from 6 hours to 24 hours.

Kaolin may be a synthesized product or a commercial product. Examples of a commercial product of kaolin include ASP-200 (product name, Hayashi-Kasei Co., Ltd.)

### (Zeolite)

In the specification, zeolite refers to an aluminum silicate having an element molar ratio Si/Al of silicon (Si) to aluminum (Al) of from 1 to 500, and refers to an aluminum silicate that includes an alkali metal or an alkaline earth metal. Zeolite may also be referred to as as a boiling stone. Examples of zeolite include an aluminum silicate having a composition expressed by X_{2/n}O▪Al₂O₃▪ySiO₂▪zH₂O [X = a metal cation, such as Na, K, and Li, n = valence of metal X, y = 2 to 200, and z = 0 or higher].

The element molar ratio Si/Al of zeolite is preferably from 1 to 100, and more preferably from 1 to 50. When the element molar ratio Si/Al is within the range, the ion-exchange capacity can be enhanced.

In a case in which zeolite is used as a source material for an electroconductive material, the moisture content thereof is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method. As a method for adjusting the moisture content of zeolite to 10 mass% or less, a heat treatment method that is commonly used may be applied without particular restriction. For example, the moisture content of zeolite can be adjusted to 10 mass% or less, by performing a heat treatment at an atmospheric pressure at from 100°C to 300°C, for from 6 hours to 24 hours.

Zeolite may be a synthesized product or a commercial product. Examples of a commercial product of zeolite include SP#600 (product name, Nitto Funka Kogyo K.K.), Molecular Sieves 4A (Wako Pure Chemical Industries, Ltd.), and Molecular Sieves 13X (Wako Pure Chemical Industries, Ltd.)

### (Saponite)

In the specification, saponite refers to an aluminum silicate that is a layered clay compound belonging to the smectite group (trioctahedral smectite) that includes a metal cation such as Mg or Ca in the structure. Examples of saponite include an aluminum silicate having a composition expressed by X_{0.33}(Mg₃)(Al_{0.33}Si_{3.67})O₁₀(OH)₂ ▪ nH₂O [X = a metal cation, such as Mg, Ca, Na, K and Li, n = 0 or higher].

The element molar ratio Si/Al of silicon (Si) to aluminum (Al) of saponite is preferably from 2 to 50, and more preferably from 5 to 30. When the element molar ratio Si/Al is within the range, the ion-exchange capacity can be enhanced.

In a case in which saponite is used as a source material for an electroconductive material, the moisture content therein is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method. As a method for adjusting the moisture content of saponite to 10 mass% or less, a heat treatment method that is commonly used may be applied without particular restriction. For example, the moisture content of saponite can be adjusted to 10 mass% or less, by performing a heat treatment at an atmospheric pressure at from 100°C to 300°C, for from 6 hours to 24 hours.

Saponite may be a synthesized product or a commercial product. Examples of a commercial product of saponite include SUMECTON (product name, Kunimine Industries Co., Ltd.)

### (Montmorillonite)

In the specification, montmorillonite refers to an aluminum silicate that is a layered clay compound belonging to the smectite group (dioctahedral smectite) having a metal cation, such as Mg and Ca, in the structure. Examples of montmorillonite include an aluminum silicate having a composition expressed by (Na, Ca)_{0.33}(Al_{1.67}, Mg_{0.33})SiO₄O₁₀(OH)₂ ▪ nH₂O.

The element molar ratio Si/Al of silicon (Si) to aluminum (Al) with respect to montmorillonite is preferably from 2 to 50, and more preferably from 5 to 30. When the element molar ratio Si/Al is within the range, the ion-exchange capacity can be further enhanced.

In a case in which montmorillonite is used as a source material for an electroconductive material, the moisture content therein is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method. As a method for adjusting the moisture content of montmorillonite to 10 mass% or less, a heat treatment method that is commonly used may be applied without particular restriction. For example, the moisture content of montmorillonite can be adjusted to 10 mass% or less, by performing a heat treatment at an atmospheric pressure at from 100°C to 300°C, for from 6 hours to 24 hours.

Montmorillonite may be a synthesized product or a commercial product. Examples of a commercial product of montmorillonite include KUNIPIA (product name, Kunimine Industries Co., Ltd.).

### (Attapulgite)

In the specification, attapulgite refers to an aluminum silicate having a fibrous crystal structure, and is also referred to as palygorskite. Examples of attapulgite include an aluminum silicate having a composition expressed by Mg(Al_{0.5 to 1}Fe_{0 to 0.5})Si₄O₁₀(OH) ▪ 4H₂O.

The element molar ratio Si/Al of silicon (Si) to aluminum (Al) of attapulgite is preferably from 2 to 50, and more preferably from 5 to 30. When the element molar ratio Si/Al is within the range, the ion-exchange capacity can be further enhanced.

In a case in which attapulgite is used as a source material for an electroconductive material, the moisture content therein is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method. As a method for adjusting the moisture content of attapulgite to 10 mass% or less, a heat treatment method that is commonly used may be applied without particular restriction. For example, the moisture content of attapulgite can be adjusted to 10 mass% or less, by performing a heat treatment at an atmospheric pressure at from 100°C to 300°C, for from 6 hours to 24 hours.

Attapulgite according to the invention may be a synthesized product or a commercial product. Examples of a commercial product of attapulgite include ATTAGEL (product name, Hayashi-Kasei Co., Ltd.).

### (Imogolite)

In the specification, imogolite refers to an aluminum silicate that has an element molar ratio Si/Al of silicon (Si) to aluminum (Al) of from 0.3 to 1.0, and is not categorized in any of the groups as described above. Examples of imogolite include an aluminum silicate having a composition expressed by nSiO₂ ▪ Al₂O₃ ▪ mH₂O [n = 0.6 to 2.0, m = 0 or higher].

The element molar ratio Si/Al of imogolite is preferably from 0.3 and less than 1.0, from a viewpoint of adsorption capacity. When the element molar ratio is within the range, the adsorption capacity of imogolite tends to increase for unnecessary metal ions such as manganese ions, nickel ions, copper ions and iron ions, but tends to decrease for lithium ions.

When the element molar ratio Si/Al is adjusted to 0.3 or more, it tends to be easier to avoid an excessive increase in the amount of Al that does not contribute to improvement of adsorption capacity for metal ions, and tends to suppress a decrease in the adsorption capacity for metal ions per unit mass. When the element molar ratio Si/Al is less than 1.0, it tends to be easier to avoid a decrease in selectivity for metal ions to be adsorbed. By using imogolite as specified above, it is possible to suppress an increase in the concentration of unnecessary metal ions in a battery, in a particularly selective manner.

The element molar ratio Si/Al of imogolite is more preferably from 0.4 to 0.6, and further preferably from 0.45 to 0.55. When the element molar ratio Si/Al is within the range, the tendencies as described above may intensify.

Imogolite preferably has a peak at approximately 3 ppm in a ²⁷Al-NMR spectrum. As a ²⁷Al-NMR analyzer, for example, AV400WB Model (Bruker BioSpin K.K.) can be used. Specific measurement conditions are as follows.

Resonant frequency: 104 MHz
Measuring method: MAS (single pulse)
MAS rotating speed: 10 kHz
Measurement range: 52 kHz
Number of data points: 4,096
Resolution (measurement range / number of data points): 12.7 Hz
Pulse width: 3.0 µsec
Delay time: 2 sec
Reference for chemical shift value: α-alumina as 3.94 ppm
Window function: exponential function
Line broadening coefficient: 10 Hz

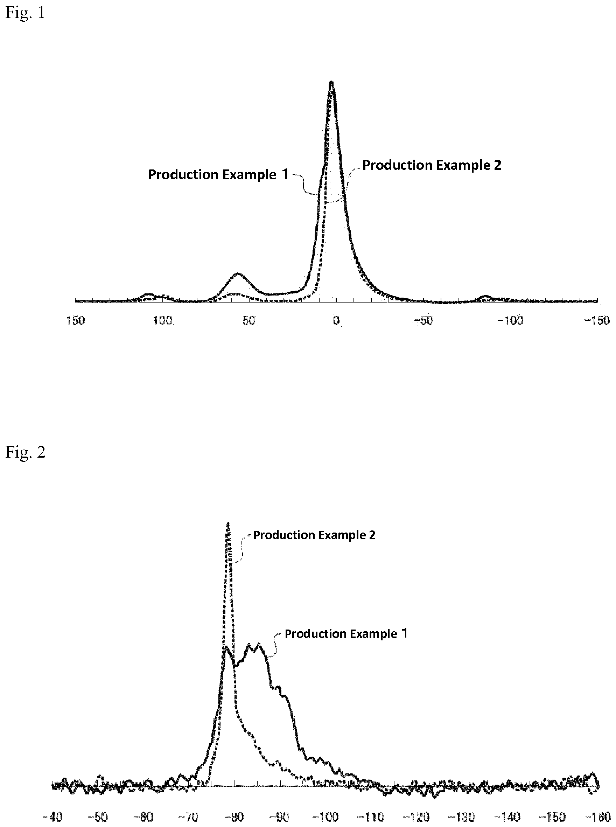

Fig. 1 shows ²⁷Al-NMR spectra of imogolites according to Production Examples 1 and 2 as described below, as examples.

As shown in Fig. 1, imogolite preferably has a peak at approximately 3 ppm in a ²⁷Al-NMR spectrum. The peak at approximately 3 ppm is presumed to be a peak attributed to 6-coordinated Al. Further, a peak may be present also at approximately 55 ppm. The peak at approximately 55 ppm is presumed to be a peak attributed to 4-coordinated Al.

In view of metal ion adsorption capacity and metal ion selectivity, imogolite preferably has an area ratio of the peak at approximately 55 ppm to the peak at approximately 3 ppm (peak at approximately 55 ppm / peak at approximately 3 ppm) in the ²⁷Al-NMR spectrum of 25% or less, more preferably 20% or less, and further preferably 15% or less.

Further, in view of metal ion adsorption capacity and metal ion selectivity, imogolite preferably has an area ratio of the peak at approximately 55 ppm to the peak at approximately 3 ppm in the ²⁷Al-NMR spectrum of 1% or more, more preferably 5% or more, and further preferably 10% or more.

Imogolite preferably has peaks at approximately -78 ppm and at approximately -85 ppm in the ²⁹Si-NMR spectrum. By using imogolite having these peaks, metal ion adsorption capacity and metal ion selectivity can be further improved.

As a ²⁹Si-NMR analyzer, AV400WB Model (Bruker BioSpin K.K.) can be used. Specific measurement conditions are as follows.

Resonant frequency: 79.5 MHz
Measuring method: MAS (single pulse)
MAS rotating speed: 6 kHz
Measurement range: 24 kHz
Number of data points: 2,048
Resolution (measurement range / number of data points): 5.8 Hz
Pulse width: 4.7 µsec
Delay time: 600 sec
Reference for chemical shift value: TMSP-d₄ (sodium 3-(trimethylsilyl)(2,2,3,3-²H₄) propionate) as 1.52 ppm
Window function: exponential function
Line broadening coefficient: 50 Hz

Fig. 2 shows ²⁹Si-NMR spectra of imogolites according to Production Examples 1 and 2 as described below, as examples.

As shown in Fig. 2, imogolite preferably has peaks at approximately -78 ppm and at approximately -85 ppm in a ²⁹Si-NMR spectrum. The peak A that appears at approximately -78 ppm is considered to derive from a crystal structure of an aluminum silicate, such as imogolite or allophane, and to attributable to a structure of HO-Si-(OAl)₃.

The peak B that appears at approximately -85 ppm is presumed to derive from an aluminum silicate having a clay structure or an aluminum silicate having an amorphous structure. Therefore, it is presumed that imogolite having peaks at approximately -78 ppm and at approximately -85 ppm is a mixture or a composite of imogolite having a crystal structure and imogolite having a clay structure or an amorphous structure.

In particular, imogolite having a peak A that appears at approximately -78 ppm has a large number of OH groups per unit mass, and exhibits an excellent ion adsorption capacity and a remarkably high selectivity in ion adsorption. As a result, the imogolite has a specific character of adsorbing unnecessary metal ions such as manganese.

Imogolite may lack a peak at approximately -85 ppm that derives from a layered clay mineral. Not having the peak refers to that displacement from the base line at approximately -85 ppm is not more than a noise level, and specifically refers to that the displacement from the base line is not more than 100% of a noise amplitude.

In view of improving metal ion adsorption capacity and metal ion selectivity, imogolite preferably has an area ratio of peak B at approximately -85 ppm to peak A at approximately -78 ppm (peak B / peak A) in a ²⁹Si-NMR spectrum of from 0.4 to 9.0, more preferably from 1.5 to 9.0, further preferably from 2.0 to 9.0, yet further preferably from 2.0 to 7.0, especially preferably from 2.0 to 5.0, and most preferably from 2.0 to 4.0.

For calculating the area ratio between the peaks in a ²⁹Si-NMR spectrum, first, a base line is drawn in the ²⁹Si-NMR spectrum. In the case of Fig. 2, a straight line connecting -55 ppm and -140 ppm is the base line.

Next, the ²⁹Si-NMR spectrum curve is segmented at a chemical shift value (approximately -81 ppm in Fig. 2) that corresponds to a valley between peaks appearing at approximately -78 ppm and at approximately -85 ppm.

The area of peak A at approximately -78 ppm in Fig. 2 is the area of a region surrounded by a straight line that is orthogonal to the chemical shift axis and crosses at -81 ppm, the base line, and the ²⁹Si-NMR spectrum curve. The area of peak B at approximately -85 ppm is the area of a region surrounded by a straight line that is orthogonal to the chemical shift axis and crosses at -81 ppm, the base line, and the ²⁹Si-NMR spectrum curve.

The areas may be calculated with a built-in analysis software in a NMR analyzer.

Imogolite preferably has peaks at approximately 2θ = 26.9° and 40.3° in a powder X-ray diffraction spectrum obtained with a CuKa ray as the X-ray source. As the X-ray diffractometer, for example, GEIGERFLEX RAD-2X (product name, Rigaku Corporation) can be used.

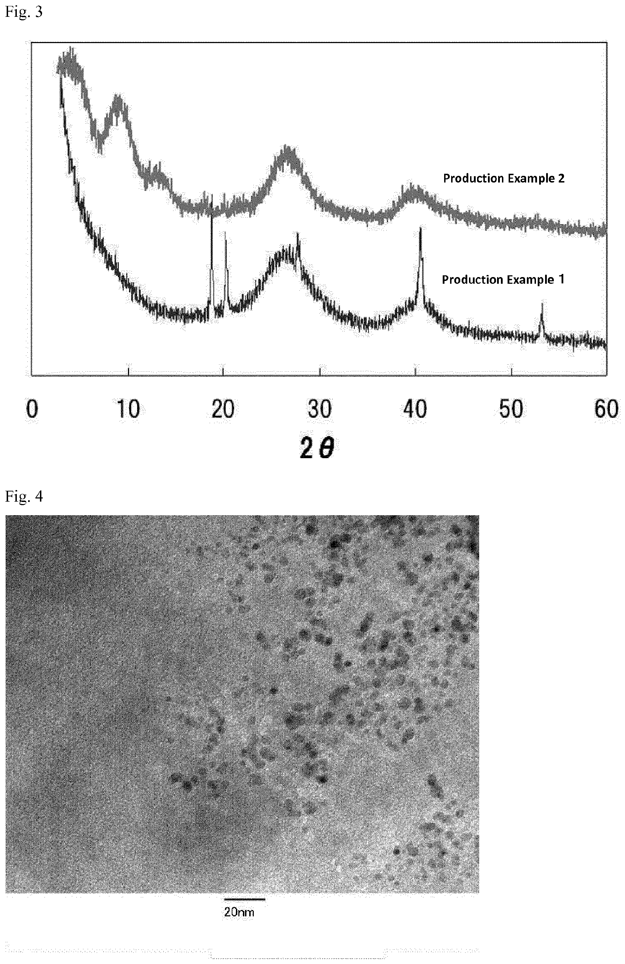

Fig. 3 shows powder X-ray diffraction spectra of imogolites according to Production Examples 1 and 2 as described below, as examples.

As shown in Fig. 3, imogolite has peaks at approximately 2θ = 26.9° and at approximately 40.3° in a powder X-ray diffraction spectrum. The peaks at approximately 2θ = 26.9° and at approximately 40.3° are presumed to be peaks deriving from imogolite.

Imogolite may lack broad peaks at approximately 2θ = 20° and at approximately 35° in a powder X-ray diffraction spectrum. The peaks at approximately 2θ = 20° and at approximately 35° are considered to be peaks deriving from a reflection at a hk0 plane of a layered clay mineral with a low crystallinity.

Not having peaks at approximately 2θ = 20° and 35° refers to that displacement from the base line at approximately 2θ=20°and 35° ppm is not more than a noise level, and specifically refers to that the displacement from the base line is not more than 100% of a noise amplitude.

Further, as with the case of imogolite according to Production Example 1, imogolite may have peaks at approximately 2θ = 18.8°, 20.3°, 27.8°, 40.6° and 53.3°. The peaks at approximately 2θ = 18.8°, 20.3°, 27.8°, 40.6° and 53.3° are presumed to be peaks deriving from aluminum hydroxide that is generated as a by-product. Precipitation of aluminum hydroxide can be suppressed by controlling the heat treatment to 160°C or less in a method for producing imogolite, as described below. Also, the content of aluminum hydroxide can be adjusted by controlling the pH during performing a desalting treatment by centrifugation.

Further, as with the case of imogolite according to Production Example 2, imogolite may have peaks at approximately 2θ = 4.8°, 9.7° and 14.0°. Imogolite may further have a peak at approximately 2θ = 18.3°. The peaks at approximately 2θ = 4.8°, 9.7°, 14.0° and 18.3° are presumed to be peaks deriving from a bundle structure formed of single fibers of tubular imogolite that are aggregating in parallel with each other.

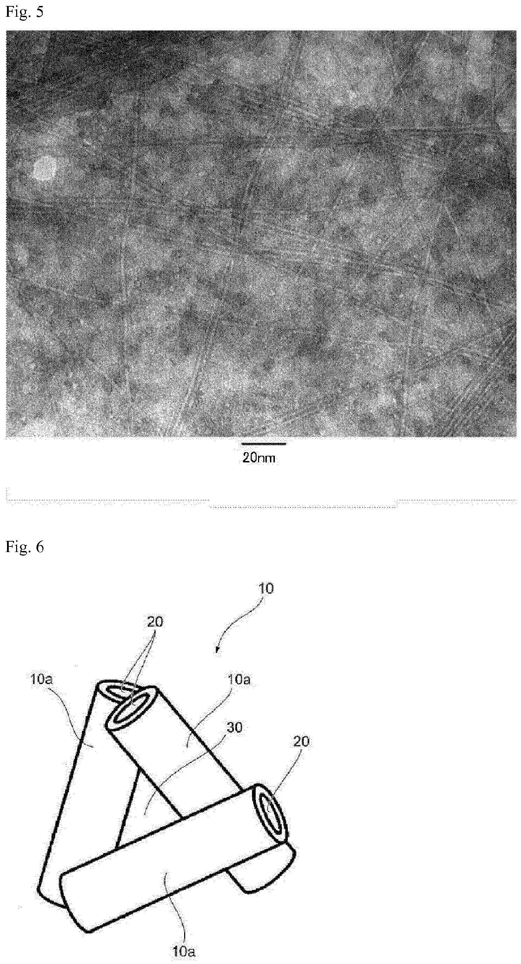

Fig. 4 and Fig. 5 show examples of a transmission electron micrograph (TEM) of imogolite. The imogolite shown in Fig. 4 is imogolite according to Production Example 1 as described below. The imogolite shown in Fig. 5 is imogolite according to Production Example 2 as described below.

As shown in Fig. 4, in the imogolite according to Production Example 1, tubular objects with a length of 50 nm or more are not observed with a transmission electron microscope (TEM) at a magnification of 100,000. The imogolite according to Production Example 2 is a typical imogolite including tubular objects, as shown in Fig. 5.

In view of metal ion adsorption capacity and metal ion selectivity, imogolite in which no tubular object with a length of 50 nm or more is observed with a transmission electron microscope (TEM) at a magnification of 100,000 is preferred.

Observation of imogolite with a transmission electron microscope (TEM) is performed at an acceleration voltage of 100 kV. The sample for observation is prepared by dropping a solution, after being heated before a second washing process (desalting and solid separation) in the production method as described below, onto a support for preparing a TEM observation sample, and then drying the solution to form a thin film. In a case in which the contrast of a TEM image is not adequate, the solution after heating is diluted appropriately such that an adequate contrast can be obtained.

Tubular objects as shown in Fig. 5 are produced by performing a heat treatment of the production method for imogolite as described below, under the conditions that a silicic acid ion concentration and an aluminum ion concentration are not more than specific levels. On the other hand, imogolite in which no tubular object is observed, as shown in Fig. 4, is produced by performing a heat treatment under the conditions that a silicic acid ion concentration and an aluminum ion concentration are at specific levels or more.

Fig. 6 is a schematic diagram showing a tubular imogolite as an example of imogolite. As shown in Fig. 6, imogolite 10 has a structure formed of plural tubular objects 10a (three in Fig. 6). Among plural tubular objects 10a, gaps 30 defined by exterior walls of tubular objects 10a are formed. Imogolite 10 tends to have a fibrous structure formed of tubular objects 10a, and inner walls 20 inside tubular objects 10a and exterior walls (outer peripheral surfaces) of tubular objects 10a, which form gaps 30 among tubular objects 10a, can be utilized as adsorption sites for metal ions. The length of tubular object 10a in a longitudinal direction is, for example, from 10 nm to 10 µm. Tubular object 10a has, for example, a cylindrical shape. The outer diameter is, for example, from 1.5 nm to 3.0 nm, and the inner diameter is, for example, from 0.7 nm to 1.4 nm.

In a case in which a tubular imogolite fiber is observed in a transmission electron micrograph (TEM), the area of peak B in a ²⁹Si-NMR spectrum tends to be smaller.

The BET specific surface area of imogolite is preferably 250 m²/g or more, from a viewpoint of improving metal ion adsorption capacity, and more preferably 280 m²/g or more. When the BET specific surface area is 250 m²/g or more, the adsorption amount of unnecessary metal ions per unit mass is increased and becomes more efficient, and therefore a higher effect tends to be achieved with a small amount of imogolite.

There is no particular restriction on the upper limit of the BET specific surface area. From a viewpoint that part of Si and Al in imogolite are bound to form Si-O-Al, which contributes to improve metal ion adsorption capacity, the BET specific surface area is preferably 1500 m²/g or less, more preferably 1200 m²/g or less, and further preferably 1000 m²/g or less.

The BET specific surface area of imogolite is measured based on a nitrogen adsorption capacity according to JIS Z 8830 (2001). For the evaluation, a nitrogen adsorption analyzer (AUTOSORB-1, Quantachrome Instruments) or the like can be used. Prior to measuring a BET specific surface area, a pretreatment is performed for removing moisture by heating, in order to avoid a possible influence on a gas adsorption capacity by moisture adsorbed on a surface and in a structure of a sample.

In the pretreatment, a measurement cell filled with 0.05 g of a measurement sample is evacuated by a vacuum pump to a degree of 10 Pa or less, then heated at 110°C for a retention time of 3 hours or more, and then naturally cooled to normal temperature (25°C) while maintaining the vacuumed state. After performing the pretreatment, the measurement is carried out at an evaluation temperature of 77K and in an evaluation pressure range of less than 1 in terms of a relative pressure (an equilibrium pressure with respect to a saturated vapor pressure).

The total pore volume of imogolite is preferably 0.10 cm³/g or more, more preferably 0.12 cm³/g or more, and further preferably 0.15 cm³/g or more, from a viewpoint of improvement of the adsorption capacity for metal ions. There is no particular restriction on the upper limit of the total pore volume. The total pore volume is preferably 1.5 cm²/g or less, more preferably 1.2 cm²/g or less, and further preferably 1.0 cm²/g or less, from a viewpoint of suppressing the adsorption amount per unit mass of moisture in the air.

The total pore volume of the aluminum silicate is determined by converting, to a liquid value, a gas adsorption amount that is closest to a relative pressure 1 among the data obtained based on a BET specific surface area within a relative pressure range of from 0.95 and less than 1.

From a viewpoint that the ion radius of unnecessary metal ions are from 0.01 nm to 0.1 nm, the average pore diameter of imogolite is preferably 1.5 nm or more, and more preferably 2.0 nm or more. In a case in which the average pore diameter is within the range, the unnecessary metal ions can be adsorbed efficiently even when the ions migrate to adsorption sites while being accompanied with a ligand. Further, there is no particular restriction on the upper limit of the average pore diameter. The smaller the average pore diameter is, the greater the specific surface area tends to be. Therefore, the average pore diameter is preferably 50 nm or less, more preferably 20 nm or less, and further preferably 5.0 nm or less. The average pore diameter of imogolite is determined based on the BET specific surface area and the total pore volume, by assuming that all pores are formed by a single cylindrical pore.

In a case in which imogolite is used as a source material for an electroconductive material, the moisture content thereof is preferably 10 mass% or less, and more preferably 5 mass% or less. When the moisture content is 10 mass% or less, generation of a gas caused upon electrolysis can be more suppressed, and expansion of a battery tends to be more suppressed. The moisture content can be measured by a Karl-Fischer method.

As a method for adjusting the moisture content of imogolite to 10 mass% or less, a heat treatment method that is commonly used may be applied without particular restriction. For example, the moisture content of imogolite can be adjusted to 10 mass% or less, by performing a heat treatment at an atmospheric pressure at from 100°C to 300°C, for from 6 hours to 24 hours.

Imogolite according to the invention may be a synthesized product or a commercial product.

In a case of synthesizing imogolite, a production method for imogolite according to the invention includes a process of preparing a reaction product by mixing a solution containing silicic acid ions and a solution containing aluminum ions, and a process of subjecting the reaction product to a heat treatment in an aqueous medium in the presence of an acid. The method may include additional processes, if necessary. In view of the yield of imogolite to be obtained, formation of a structure, or the like, it is preferable to have a washing process in which desalting and solid separation are performed before or after the heat treatment.

By subjecting the reaction product (a solution containing imogolite) to a desalting treatment for removing coexisting ions therefrom, and then to a heat treatment in the presence of an acid, production of imogolite having an excellent metal ion adsorption capacity tends to be more efficient. Examples of coexisting ions include sodium ions, chloride ions, perchlorate ions, nitrate ions, and sulfate ions.

This is considered to be as follows, for example. By performing a heat treatment in the presence of an acid to imogolite from which coexisting ions have been removed, which obstructs formation of a regular structure, imogolite having a regular structure can be formed. It is considered that imogolite having a regular structure exhibits improved affinity with respect to metal ions, thereby adsorbing metal ions efficiently.

More preferably, the method for producing imogolite includes a process of performing desalting and solid separation before and after the heat treatment.

Namely, an example of a preferred method for producing imogolite includes: (a) a process for obtaining a reaction product by mixing a solution containing silicic acid ions and a solution containing aluminum ions; (b) a process for performing desalting and solid separation of the reaction product (first washing process); (c) a process of performing a heat treatment in the presence of an acid to the solid separated in process (b) in an aqueous medium (synthesis process); and (d) a process for performing desalting and solid separation of the product obtained by performing the heat treatment in process (c) (second washing process). The method may include other processes, if necessary.

In the following, a method for producing imogolite will be described according to the preferable production method.

### (a) Process for obtaining reaction product

In the process for obtaining a reaction product, a solution containing silicic acid ions and a solution containing aluminum ions are mixed to obtain a mixed solution. The mixed solution includes a reaction product that includes imogolite and coexisting ions.

### (a-1) Silicic acid ions and aluminum ions

For producing imogolite, silicic acid ions and aluminum ions are necessary as source materials. There is no particular restriction on a source for silicic acid, which constitutes a solution containing silicic acid ions (hereinafter, also referred to as a "silicic acid solution"), insofar as silicic acid ions are generated upon solvation. Examples of the silicic acid source include sodium orthosilicate, sodium metasilicate, and tetraalkoxysilanes such as tetraethoxysilane, but the silicic acid source is not limited to thereto.

There is no particular restriction on a source for aluminum, which constitutes a solution containing aluminum ions (hereinafter, also referred to as an "aluminum solution"), insofar as aluminum ions are generated upon solvation. Examples of the aluminum source include aluminum chloride, aluminum perchlorate, aluminum nitrate, aluminum sulfate, and aluminum sec-butoxide, but the aluminum source is not limited thereto.

A solvent may be selected from any solvent that can easily solvate with a silicic acid source and an aluminum source as source materials. Specific examples of the solvent include water and ethanol. In view of reducing the amount of coexisting ions in the solution during a heat treatment, and ease of handling, water is preferable as the solvent.

### (a-2) Mixture ratio and solution concentration

The source materials are dissolved in a solvent to prepare source material solutions (a silicic acid solution and an aluminum solution), respectively, and the solutions are mixed to obtain a mixed solution. It is possible to obtain imogolite having a specific element molar ratio Si/Al by adjusting the element molar ratio Si/Al of Si and Al in the mixed solution so as to conform to the element molar ratio Si/Al of the imogolite to be obtained. For example, the element molar ratio may be adjusted to from 0.3 to 1.0, preferably from 0.3 to less than 1.0, more preferably from 0.4 to 0.6, and further preferably from 0.45 to 0.55. When the element molar ratio Si/Al is from 0.3 to and less than 1.0, imogolite having a desired regular structure can be readily synthesized.

The mixing of the source material solutions is preferably conducted such that the silicic acid solution is added gradually to the aluminum solution. In this way, polymerization of silicic acid, which may inhibit formation of a desired imogolite, can be suppressed.

There is no particular restriction on the silicon atom concentration in the silicic acid solution, and the concentration is preferably from 1 mmol/L to 1000 mmol/L.

When the silicon atom concentration in the silicic acid solution is 1 mmol/L or more, productivity is improved and a desired imogolite can be produced efficiently. Meanwhile, when the silicon atom concentration is 1000 mmol/L or less, productivity maybe improved according to the silicon atom concentration.

There is no particular restriction on the aluminum atom concentration in the aluminum solution, and the concentration is preferably from 100 mmol/L to 1000 mmol/L.

When the aluminum atom concentration in the aluminum solution is 100 mmol/L or more, productivity is more improved and a desired imogolite can be produced efficiently. When the aluminum atom concentration is 1000 mmol/L or less, productivity can be improved according to the aluminum atom concentration.

### (b) First washing process (desalting and solid separation)

After generating imogolite including coexisting ions as a reaction product, in the mixed solution prepared by mixing a solution containing silicic acid ions and a solution containing aluminum ions, a first washing process for subjecting imogolite to desalting and solid separation is performed. In the first washing process, at least part of coexisting ions is removed from the mixed solution to lower the concentration of coexisting ions in the mixed solution. By performing the first washing process, it becomes easier to form a desired imogolite in the synthesis process.

There is no particular restriction on a method for performing desalting and solid separation in the first washing process, insofar as at least part of anions other than silicic acid ions (such as chloride ions and nitrate ions) and cations other than aluminum ions (such as sodium ions), deriving from the silicic acid source and the aluminum source, can be removed (desalted) and a solid can be separated. Examples of the method for the first washing process include a method using centrifugation, a method using a dialysis membrane, and a method using an ion exchange resin.

The first washing process is preferably performed such that the concentration of coexisting ions in the mixed solution becomes not more than a predetermined concentration. For example, when a solid separated in the first washing process is dispersed in pure water at a concentration of 60 g/L, the concentration of coexisting ions can be made to 500 mmol/L or below. To attain such a concentration, for example, if a solid separated in the first washing process is dispersed in pure water at a concentration of 60 g/L, it is preferable to perform washing such that the electroconductivity of the dispersion becomes 4.0 S/m or less, more preferably from 1.0 mS/m to 3.0 S/m, and further preferably from 1.0 mS/m to 2.0 S/m.

When the electroconductivity of the dispersion is 4.0 S/m or less, it tends to become easier to form a desired aluminum silicate in the synthesis process.

The electroconductivity is measured at normal temperature (25°C) using F-55 and a general electric conductivity cell 9382-10D (Horiba, Ltd.)

The first washing process preferably includes a process for obtaining a dispersion by dispersing the imogolite in a solvent, a process for adjusting the pH of the dispersion to between 5 and 8, and a process for allowing imogolite to precipitate.

For example, in a case in which the first washing process is performed by centrifugation, the process can be performed as follows. The pH of the dispersion is adjusted by adding an alkali or the like to the dispersion, and the dispersion is centrifuged and a supernatant solution is discarded, and a gel-like precipitate is separated. Then, the separated solid is redispersed in a solvent. The redispesion is preferably performed such that the volume of the dispersion is equal to the volume of the dispersion before the centrifugation. The redispersed dispersion is again centrifuged by repeating desaltation and solid separation in a similar manner, whereby the concentration of coexisting ions can be made equal to or less than a predetermined concentration.

In the first washing process, the pH of the dispersion is adjusted to between 5 to 8, for example. The pH of the dispersion is preferably from 5.5 to 6.8, and more preferably from 5.8 to 6.5. There is no particular restriction on the alkali to be used for adjusting pH, and sodium hydroxide and ammonia are preferable, for example.

The conditions for the centrifugation are selected according to the production scale, the type of the container, the size of the container, and the like.

The conditions for the centrifugation may be, for example, at room temperature (25°C) at 1200 G or higher, for from 1 min to 30 min. Specifically, for example, in a case in which SUPREMA 23 (Tomy Seiko Co., Ltd.) is used as a centrifuge and NA-16 (Tomy Seiko Co., Ltd.) is used as a standard rotor, the centrifugation may be performed at room temperature, at 3000 min⁻¹ (revolutions/min) (1450 G) or higher, and for from 5 min to 10 min.

The solvent for the first washing process may be selected from any solvent that can easily solvate with a source material, and specific examples thereof include water and ethanol. In view of reducing the amount of coexisting ions in the solution during synthesis by heating and ease of handling, water is preferred and pure water is more preferred. If washing is performed for plural times, it is preferred to omit adjustment of pH of the mixed solution.

The number of performing desalting and solid separation in the first washing process may be determined according to the residual amount of coexisting ions. The number of treatments is may be from 1 to 6, for example. By performing washing for approximately three times, the residual amount of coexisting ions may be decreased so that the coexisting ions do not affect the synthesis of a desired imogolite.

The measurement of pH in the process of adjusting the same may be performed with a pH meter using a general glass electrode. Specifically, for example, a pH meter (F-51 Model, Horiba, Ltd.) may be used.

### (c) Synthesis process

In the synthesis process, the separated solid obtained in the first washing process is subjected to a heat treatment in an aqueous medium in the presence of an acid.

By performing the heat treatment to a solution (dispersion) that includes imogolite and has a reduced concentration of coexisting ions, obtained in the first washing process, in the presence of an acid, thereby forming a desired imogolite having a regular structure.

In the synthesis process, a separated solid obtained in the first washing process may be diluted and the synthesis may be performed with the diluted solution, or the synthesis may be performed with a high concentration solution of the separated solid obtained in the first washing process.

By performing the synthesis process in a diluted solution, imogolite having a structure in which a regular structure is extended in a tubular form (hereinafter, also referred to as "first imogolite") can be obtained. Meanwhile, by performing the synthesis process in a high concentration solution, imogolite having a clay structure and an amorphous structure, in addition to a regular structure (hereinafter, also referred to as "second imogolite") can be obtained. In the second imogolite, it is presumed that formation of a clay structure and an amorphous structure progresses instead of growing into a tubular structure of 50 nm or more in length.

The first imogolite and the second imogolite both exhibit a superior metal ion adsorption capacity because of their specific regular structure.

The conditions for diluting a solution for obtaining the first imogolite in the synthesis process may be, for example, the silicon atom concentration of 20 mmol/L or less and the aluminum atom concentration of 60 mmol/L or less. In view of metal ion adsorption capacity, the silicon atom concentration of from 0.1 mmol/L to 10 mmol/L and the aluminum atom concentration of from 0.1 mmol/L to 34 mmol/L is preferred, and the silicon atom concentration of from 0.1 mmol/L to 2 mmol/L and the aluminum atom concentration of from 0.1 mmol/L to 7 mmol/L is more preferred.

When the silicon atom concentration is 20 mmol/L or less and the aluminum atom concentration is 60 mmol/L or less, it tends to be able to produce the first imogolite more efficiently.

In the synthesis of the first imogolite, the reaction rate may be low since it is caused in a dilute solution, and there may be a case in which the Si/Al ratio in the feed differs from the Si/Al ratio in the obtained imogolite. In that case, imogolite having a desired Si/Al ratio tends to be obtained by adjusting the silicon atom amount in the source material to be lower than a desired ratio.

The conditions for obtaining the second imogolite may be, for example, the silicon atom concentration of 100 mmol/L or more and the aluminum atom concentration of 100 mmol/L or more. In view of metal ion adsorption capacity, the silicon atom concentration of from 120 mmol/L to 2000 mmol/L and the aluminum atom concentration of from 120 mmol/L to 2000 mmol/L is preferred, and the silicon atom concentration of from 150 mmol/L to 1500 mmol/L and the aluminum atom concentration of from 150 mmol/L to 1500 mmol/L is more preferred.

When the silicon atom concentration is 100 mmol/L or more and the aluminum atom concentration is 100 mmol/L or more, the second imogolite can be produced more efficiently, and productivity of aluminum silicate is further improved.

The silicon atom concentration and the aluminum atom concentration as described above are the concentrations measured after the pH of the solution is adjusted to be within predetermined ranges by adding an acidic compound as described below.

The silicon atom concentration and the aluminum atom concentration are measured with an ICP light emission spectroscope (for example, ICP light emission spectroscope: P-4010, Hitachi, Ltd.) by an ordinary method.

For adjusting the silicon atom concentration and the aluminum atom concentration to predetermined concentrations, a solvent may be added to the solution. The solvent may be selected from those that can readily solvate with source materials. Specific examples of the solvent include water and ethanol. In view of reducing the amount of coexisting ions in the solution during the heat treatment and ease of handling, water is preferable and pure water is more preferable.

In the synthesis process, at least one kind of acidic compound is added to a solution before performing the heat treatment. There is no particular restriction on the pH of the solution after the addition of an acidic compound. The pH of the solution is preferably from 3 to less than 7 from a viewpoint of efficient formation of a desired imogolite, and more preferably from 3 to 5.

There is no particular restriction on the acidic compound to be added in the synthesis process, and it may be either an organic acid or an inorganic acid, and an inorganic acid is preferable. Specific examples of the inorganic acid include hydrochloric acid, perchloric acid and nitric acid. In view of reducing the amount of coexisting ions in the solution at a subsequent heat treatment, an acidic compound that generates the same anion as the anion included in the aluminum source is preferable.

Imogolite with a desired structure can be yielded by performing a heat treatment after addition of an acidic compound in a solution.

There is no particular restriction on the temperature of the heat treatment. In view of obtaining a desired imogolite efficiently, the temperature of the heat treatment is preferably from 80°C to 160°C.

When the temperature of the heat treatment is 160°C or less, precipitation of boehmite (aluminum hydroxide) tends to be suppressed. When the temperature of the heat treatment is 80°C or more, the rate of synthesis of a desired aluminum silicate is increased and a desired imogolite tends to be produced more efficiently.

There is no particular restriction on the time for the heat treatment. In order to obtain imogolite having a desired structure more efficiently, the time for the heat treatment is preferably 96 hours (4 days) or less. When the time for the heat treatment duration is 96 hours or less, a desired imogolite can be produced more efficiently.

### (d) Second washing process (desalting and solid separation)

In the second washing process, the product obtained by the heat treatment in the synthesis process is subjected to desalting and solid separation. By performing the second washing, imogolite that exhibits an excellent metal ion adsorption capacity tends to be obtained. This can be interpreted as follows, for example. In the product obtained by performing the heat treatment in the synthesis process, adsorption sites of imogolite may be blocked by coexisting ions, and the metal ion adsorption capacity may be less than expected. Under such circumstances, it is thought that a desired imogolite that exhibits an excellent metal ion adsorption capacity can be obtained by performing the second washing process, in which at least part of coexisting ions are removed by desalting and solid separation from imogolite obtained as a product in the synthesis process.

In the second washing process, it is satisfactory if at least part of anions other than silicic acid ions and cations other than aluminum ions are removed by washing (desalting and solid separation). The washing treatment for the second washing process may be the same operation as the first washing process before the synthesis process, or may be a different operation.

The second washing process is preferably carried out such that the concentration of coexisting ions is decreased to a predetermined concentration or less. In that case, for example, when a solid separated in the second washing process is dispersed in pure water at a concentration of 60 g/L, the concentration of coexisting ions can be made 500 mmol/L or less. Specifically, for attaining a coexisting ion concentration of this level, for example, in a case in which a solid separated in the second washing process is dispersed in pure water at a concentration of 60 g/L, washing is preferably conducted such that the electric conductivity of the dispersion becomes 4.0 S/m or less, more preferably from 1.0 mS/m to 3.0 S/m, and further preferably from 1.0 mS/m to 2.0 S/m.

When the electric conductivity of the dispersion is 4.0 S/m or less, imogolite that exhibits an excellent metal ion adsorption capacity tends to be obtained more easily.

In a case in which the second washing process is performed by centrifugation, it can be performed, for example, as follows. A solvent is added to a product obtained after the heat treatment to prepare a mixed solution. The pH of the mixed solution is adjusted to from 5 and 10 by adding an alkali or the like. Then, the mixed solution is centrifuged and a supernatant solution is discarded, thereby separating a gel-like precipitate. Subsequently, the separated precipitate is redispersed in a solvent. In that case, the volume of the dispersion is preferably adjusted to be equal to the volume of the dispersion before performing the centrifugation. The redispersed dispersion is again subjected to centrifugation, and desalting and solid separation in a similar manner, whereby the coexisting ion concentration is lowered to a predetermined concentration or below, for example, 3 mass% or below.

In the second washing process, the pH of the mixed solution is preferably adjusted to, for example, from 5 and 10, and more preferably from 8 and 10. There is no particular restriction on an alkali to be used for the pH adjustment. Examples of the alkali to be used for the pH adjustment include sodium hydroxide and ammonia.

The conditions for the centrifugation may be selected according to the production scale, the type of the container, and the size of the container, for example. The conditions for the centrifugation may be, for example, at room temperature (25°C) at 1200 G or higher, for from 1 min to 30 min. Specifically, for example, when SUPREMA 23 (Tomy Seiko Co., Ltd.) is used as a centrifuge of and NA-16 (Tomy Seiko Co., Ltd.) is used as a standard rotor, the specific conditions for the centrifugation may be at room temperature, at 3000 min⁻¹ (revolutions/min) (1450 G) or higher, and for from 5 min to 10 min.

The solvent for the second washing process may be selected from solvents that easily solvate with a product obtained after the heat treatment, and specific examples thereof include water and ethanol. In view of reducing the amount of coexisting ions and ease of handling, water is preferably and pure water is more preferable. When washing is performed plural times, it is preferred to omit the adjustment of the pH of the mixed solution.

The number of desalting and solid separation treatments in the second washing process may be decided according to the residual amount of coexisting ions. The number of desalting and solid separation treatments is preferably from 1 to 6, and more preferably approximately 3. When washing is repeated for approximately 3 times, the residual amount of coexisting ions in imogolite can be sufficiently reduced.

In the dispersion after performing the second washing process, it is preferable that the concentrations of chloride ions and sodium ions, which affect adsorption capability of imogolite, are especially low among the residual coexisting ions. Namely, when imogolite that has been subjected to washing in the second washing process is dispersed in water to prepare a water dispersion with a concentration of 400 m g/L, it is preferred that the chloride ion concentration is 100 m g/L or less and the sodium ion concentration 100 m g/L or less. When the chloride ion concentration is 100 m g/L or less and the sodium ion concentration is 100 mg/L or less, the adsorption capacity of imogolite can be improved. The chloride ion concentration is more preferably 50 mg/L or less, and further preferably 10 mg/L or less. The sodium ion concentration is more preferably 50 mg/L or less, and further preferably 10 mg/L or less. The chloride ion concentration and the sodium ion concentration can be adjusted by adjusting the number of times for the washing process, or by selecting the type of alkali used for the pH adjustment.

The chloride ion concentration and the sodium ion concentration are measured by ion chromatography (for example, by DX-320 and DX-100, Nippon Dionex K.K.) under the ordinary conditions.

The concentration of imogolite in the dispersion is based on the mass of a solid, which is obtained by drying a separated solid at 110°C, for 24 hours.

The term "dispersion after the second washing process" herein refers to a dispersion that is prepared by adding a solvent to a dispersion after performing the second washing process, and has a volume of equal to the volume of the dispersion before performing the second washing process. The solvent may be selected from solvents that can easily solvate with a source material, and specific examples of the solvent include water and ethanol. In view of reducing the amount of residual coexisting ions in imogolite and ease of handling, water is preferable and pure water is more preferable.

The BET specific surface area of imogolite can be adjusted by a treatment method for the second washing process (for example, a method in which the pH of the synthesis solution is adjusted to from 5 and 10 by adding an alkali or the like, the solution is centrifuged and a supernatant solution is discarded, thereby separating imogolite remaining as a gel-like precipitate, and the separated imogolite is redispersed in a solvent such that the volume of the dispersion is equal to the volume of the solution before the centrifugation. These processes may be performed once or may be repeated plural times.)

The total pore volume of imogolite can be adjusted by a treatment method for the second washing process (for example, a method in which the pH of the synthesis solution is adjusted to from 5 and 10 by adding an alkali or the like, the solution is centrifuged and a supernatant solution is discarded, thereby separating imogolite remaining as a gel-like precipitate, and the separated imogolite is redispersed in a solvent such that the volume of the dispersion is equal to the volume of the solution before the centrifugation. These processes may be performed once or may be repeated plural times.)

The average pore diameter of imogolite can be adjusted a treatment method for the second washing process (for example, a method in which the pH of the synthesis solution is adjusted to from 5 and 10 by adding an alkali or the like, the solution is centrifuged and a supernatant solution is discarded, thereby separating imogolite remaining as a gel-like precipitate, and the separated imogolite is redispersed in a solvent such that the volume of the dispersion is equal to the volume of the solution before the centrifugation. These processes may be performed once or may be repeated plural times.)

By drying a solid separated in the second washing process (a precipitate containing imogolite) through a heat treatment, an imogolite powder can be obtained. The temperature of the heat treatment is preferably from 30°C to 180°C, more preferably from 40°C to 150°C, and further preferably from 50°C to 120°C.

### [Carbon coating]

In the aluminum silicate composite according to the invention, carbon is disposed on a surface of an aluminum silicate. The carbon is disposed on at least part of a surface or on the entire surface of the aluminum silicate composite.

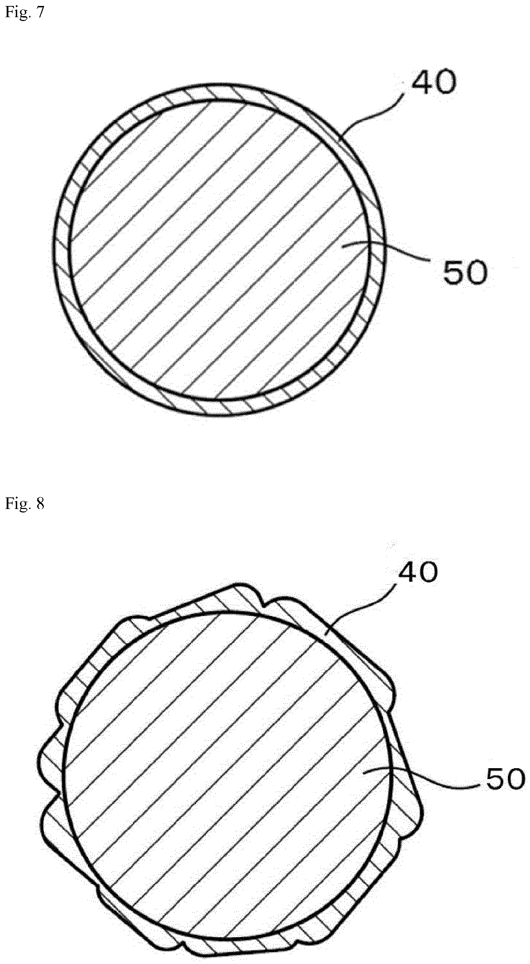

It is satisfactory if carbon is disposed on a surface of the aluminum silicate. Fig. 7 to Fig. 11 are schematic cross-sectional views of the examples of the structure of the aluminum silicate composite according to the invention.

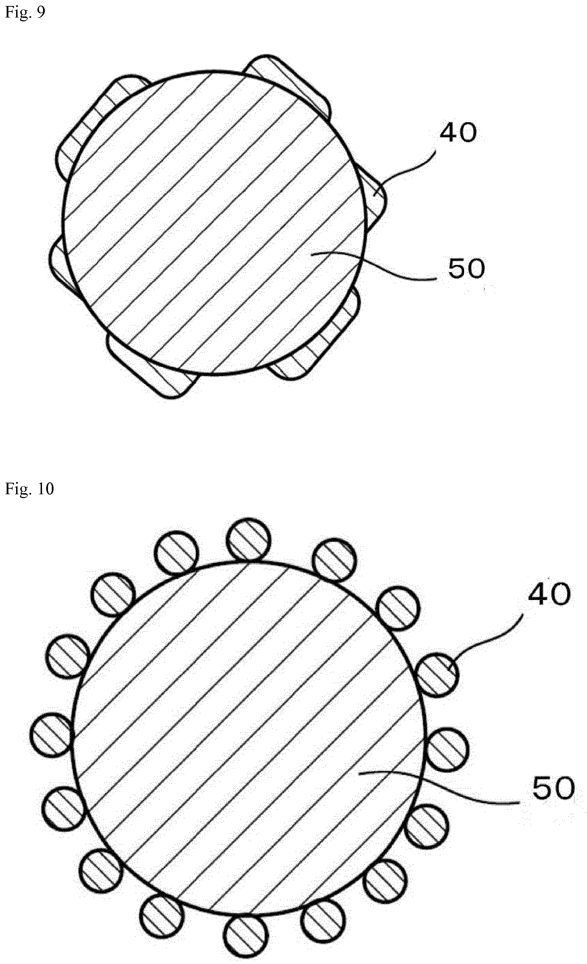

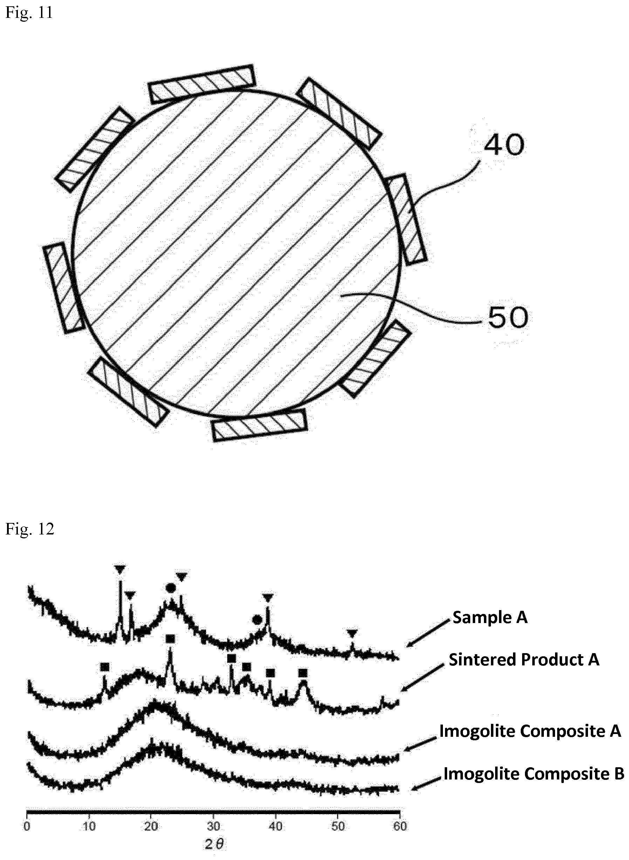

In Fig. 7, carbon 40 covers the entire surface of aluminum silicate 50. In Fig. 8, carbon 40 covers the entire surface of aluminum silicate 50, but the thickness of carbon 40 is uneven. In Fig. 9, carbon 40 exists partially on a surface of aluminum silicate 50, and there is a portion not covered with carbon 40 at the surface of aluminum silicate 50. In Fig. 10, there are particles of carbon 40 having a smaller particle diameter than that of aluminum silicate 50 on a surface of the aluminum silicate 50. Fig. 11 is a variant of Fig. 10, and carbon 40 has a scaly shape. Although the shapes of aluminum silicate 50 shown in Fig. 7 to Fig. 11 are schematically depicted as spherical (with a circular cross-section), it may be spherical, blockish, scaly, polygonal in a cross-section (cornered shape) or the like.

In a case in which the aluminum silicate is formed of plural tubular objects, it is sufficient when carbon is disposed at least partly or entirely on an exterior wall of the tubular objects, in a microscopic sense, and carbon may be placed at least partly or entirely on an inner wall of the tubular objects.

In a case in which microscopic aluminum silicates form a particle by assembling, bonding or aggregating, it is sufficient when carbon is placed at least partly or entirely on particle surfaces, and if there are pores in the particle formed by assembling, bonding or aggregating of aluminum silicate, carbon may be placed at least partly or entirely in the pores.

Whether or not carbon is present inside the aluminum silicate (portion of the aluminum silicate that does not appear externally, such as inner walls of tubular objects that forms the aluminum silicate, the inside of pores existing in a particle formed by assembling, bonding or aggregation of aluminum silicates, and the like) can be confirmed by the following method.

Namely, the conditions inside the aluminum silicate can be confirmed by embedding a sample in a thermosetting resin (epoxy resin) and curing and molding the same. Thereafter, the cured and molded resin is mechanically polished such that the inside of the aluminum silicate is exposed, and the portion corresponding to the inside of the aluminum silicate is observed with a scanning electron microscope (SEM). Whether or not carbon is present inside the aluminum silicate can be confirmed by energy dispersive X-ray spectroscopy (EDX) using an SEM.

### [Characteristics of aluminum silicate composite]

The carbon content of the aluminum silicate composite is preferably from 0.1 mass% to 50 mass%. When the carbon content is 0.1 mass% or more, the water adsorption amount of an aluminum silicate composite tends to become lower, and the electroconductivity of the same tends to increase. When the content is 50 mass% or less, the metal ion adsorption capacity of the aluminum silicate composite tends to be utilized more effectively. The carbon content of the aluminum silicate composite is more preferably from 0.5 mass% to 40 mass%, and further preferably from 1 mass% to 30 mass%.

The carbon content of the aluminum silicate composite is measured with a thermogravimetry-differential thermal analysis device (TG-DTA) in terms of a mass loss rate at a temperature increase rate of 20°C/min and a retention time of 20 min at 800°C.

The aluminum silicate composite preferably has an R value of from 0.1 to 5.0, more preferably from 0.3 to 3.0, and further preferably from 0.5 to 1.5. The R value is an intensity ratio Id/Ig (D/G) where Id refers to an intensity of a peak that appears at approximately 1360 cm⁻¹ and Ig refers to an intensity of a peak that appears at approximately 1580 cm⁻¹ in a Raman spectrum obtained by laser Raman spectrometry with an excitation wavelength of 532 nm. When the R value is 0.1 or more, an effect of covering a surface with amorphous carbon tends to be superior, and when the R value is 5.0 or less, excessive covering with carbon tends to be suppressed.

The peak that appears at approximately 1360 cm⁻¹ is a peak identified as corresponding to an amorphous structure of carbon, and typically refers to a peak that is observed between 1300 cm⁻¹ and 1400 cm⁻¹. The peak that appears at approximately 1580 cm⁻¹ is a peak identified as corresponding to a crystal structure of carbon, and typically refers to a peak that is observed between 1530 cm⁻¹ and 1630 cm⁻¹.

The R value can be determined by Raman spectrum analysis based on a base line covering the entire measurement range (from 830 cm⁻¹ to 1940 cm⁻¹) with a Raman spectrometer (for example, NSR-1000 Model, excitation wavelength 532 nm, Jasco Corporation).

The powder resistivity of the aluminum silicate composite is preferably from 0.001 Ω ▪ cm to 100 Ω ▪ cm, more preferably from 0.001 Ω ▪ cm to 50 Ω ▪ cm, further preferably from 0.001 Ω ▪ cm to 30 Ω ▪ cm, and especially preferably from 0.001 Ω ▪ cm to 10 Ω ▪ cm. When the powder resistivity of the aluminum silicate composite is 0.001 Ω ▪ cm or more, the metal ion adsorption capacity of the aluminum silicate composite tends to be maintained better. Meanwhile, when the same is 100 Ω ▪ cm or less, possibility of the aluminum silicate composite to become an inhibitory factor to battery electrical properties tends to be suppressed.

The powder resistivity is a value of volume resistivity measured with a powder resistance measurement system (for example, LORESTA GP, Mitsubishi Chemical Analytech Co., Ltd.) at a pressure of 3,842 N/cm² (382 Kgf/cm²).

The volume average particle diameter of the aluminum silicate composite is preferably from 0.1 µm to 100 µm, more preferably from 0.5 µm to 50 µm, and further preferably from 1 µm to 30 µm. When the volume average particle diameter of the aluminum silicate composite is 0.1 µm or more, handling of a powder tends to be easier. When the same is 100 µm or less, a film formed with a dispersion including the aluminum silicate composite tends to be more uniform.

The volume average particle diameter of the aluminum silicate composite is measured by laser diffractometry. The laser diffractometry can be conducted with a laser diffraction particle size distribution analyzer (for example, SALD-3000J, Shimadzu Corporation).

Specifically, a dispersion is prepared by dispersing the aluminum silicate composite in a dispersing medium such as water. With the dispersion, a cumulative volume distribution curve from the smaller diameter side is obtained with a laser diffraction particle size distribution analyzer. Then, the volume average particle diameter is determined as a particle diameter (D50) at which the cumulated value is 50%.

In the specification, the "volume average particle diameter" refers to a value measured according to the aforedescribed method.

The aluminum silicate composite according to the invention has a water adsorption amount that is less than that of an aluminum silicate not having carbon on its surface. The water adsorption amount of the aluminum silicate composite varies depending on the kind and the amount of carbon disposed on a surface. The water adsorption amount of the aluminum silicate composite is preferably from 0.0001 mass% to 30 mass% from a viewpoint of effective utilization of the metal ion adsorption capacity of aluminum silicate, more preferably from 0.0001 mass% to 20 mass%, and further preferably from 0.0002 mass% to 10 mass%.

The water adsorption amount according to the invention is a value determined by measuring a change between a mass of the aluminum silicate composite after drying in vacuum at 130°C for 3 hours, and a mass after being left standing after the drying under the conditions of a temperature of 20°C and a humidity between 90% and 99% for 24 hours.

From a viewpoint of metal ion adsorption capacity, the aluminum silicate in the aluminum silicate composite is preferably at least one selected from the group consisting of imogolite, allophane, kaolin, saponite, zeolite, montmorillonite and attapulgite.

In a case of imogolite, in view of metal ion adsorption capacity, metal ion selectivity, and electrical properties, it is more preferable that imogolite has an element molar ratio Si/Al of imogolite of from 0.3 to 1.0 (preferably less than 1.0) and satisfies at least one of the following characteristics.
(1) A peak appears at approximately 3 ppm in a ²⁷Al-NMR spectrum.
(2) Peaks appear at approximately near -78 ppm and near -85 ppm in a ²⁹Si-NMR spectrum.
(3) Peaks appear at approximately 2θ = 26.9°and 40.3°, but does not appear at approximately 2θ = 20° and 35° in a powder X-ray diffraction spectrum with a CuKa ray as an X-ray source.
(4) The area ratio of peak B at approximately -85 ppm to peak A at approximately -78 ppm (peak B / peak A) is from 2.0 to 9.0.
(5) The BET specific surface area is 250 m²/g or more.
(6) The moisture content is 10 mass% or less.

### [Method for producing aluminum silicate composite]

The method for producing the aluminum silicate composite includes a process for obtaining an aluminum silicate, and process for applying carbon to a surface of the aluminum silicate. The method may include other processes, as necessary.

### (Process for obtaining aluminum silicate)

The process for obtaining an aluminum silicate is not particularly limited as long as an aluminum silicate to which carbon is to be applied can be obtained, and may include preparing an aluminum silicate or producing an aluminum silicate from a silicic acid source and an aluminum source. The method for producing an aluminum silicate may be the method as described above. The method for preparing an aluminum silicate may be, for example, obtaining and using a commercial product as is.

### (Process for applying carbon)

In the process for applying carbon, carbon is applied to a surface of the aluminum silicate. In this way, carbon is disposed on a surface of the aluminum silicate. The method for applying carbon to a surface of the aluminum silicate is not particularly restricted, and examples thereof include a wet mixing method, a dry mixing method, and a chemical vapor deposition method. From the viewpoint that a thickness of carbon disposed on a surface of an aluminum silicate can be readily averaged, that a reaction system can be readily regulated, and that the process can be performed at an atmospheric pressure, a wet mixing method (also referred to as a "wet process") or a dry mixing method (also referred to as a "gas-phase process") is preferable

In the wet mixing method, for example, an aluminum silicate is mixed with a solution in which a carbon source is dissolved in a solvent, such that the carbon source solution is in contact with a surface of aluminum silicate, and the solvent is removed if necessary. Then, the carbon source is carbonized by performing a heat treatment in an inert atmosphere, thereby applying carbon to a surface of the aluminum silicate. If carbon does not dissolve in the solvent, a dispersion in which carbon is dispersed in a dispersing medium may be used.

The content of the carbon source in the solution or the dispersion is preferably from 0.01 mass% to 30 mass%, more preferably from 0.05 mass% to 20 mass%, and further preferably from 0.1 mass% to 10 mass%, from a viewpoint of ease of dispersing. The mixture ratio of the aluminum silicate to the carbon source (aluminum silicate : carbon source) is preferably from 100:1 to 100:500 by mass ratio, and more preferably from 100:5 to 100:300, from a viewpoint of achieving both metal ion adsorption capacity and a low water adsorption amount, or both metal ion adsorption capacity and electrical conductivity.

In the dry mixing method, for example, a mixture is prepared by mixing an aluminum silicate in a solid state and a carbon source in a solid state, and the carbon source is carbonized by performing a heat treatment an inert atmosphere, thereby applying carbon to a surface of the aluminum silicate. During the mixing, a treatment of applying a mechanical energy (for example, mechanochemical treatment) may be conducted.

The mixture ratio of the aluminum silicate to the carbon source (aluminum silicate : carbon source) when mixing the aluminum silicate in a solid state and the carbon source in a solid state is preferably from 100:1 to 100:500 by mass ratio from a viewpoint of achieving both metal ion adsorption capacity and a low water adsorption amount, and more preferably from 100:5 to 100:300.

For the chemical vapor deposition method, any known method may be applied. For example, carbon can be applied to a surface of an aluminum silicate by performing a heat treatment to an aluminum silicate in an atmosphere including a gas of a vaporized carbon source.

In a case of applying carbon to a surface of aluminum silicate by a wet mixing method or a dry mixing method, there is no particular restriction on the carbon source, insofar as it is a compound that can leave carbon by a heat treatment, and specific examples thereof include polymers, such as a phenolic resin, a styrenic resin, poly(vinyl alcohol), poly(vinyl chloride), poly(vinyl acetate) and polybutyral; pitches, such as ethylene heavy-end pitch, coal pitch, petroleum pitch, coal tar pitch, thermally cracked asphalt pitch, PVC pitch generated by thermal cracking of poly(vinyl chloride) (PVC), and naphthalene pitch produced by polymerization of naphthalene and the like in the presence of a superstrong acid; and polysaccharides, such as starch and cellulose. These carbon sources may be used singly or in a combination of two or more kinds.

In a case of applying carbon to a surface of an aluminum silicate by a chemical vapor deposition method, the carbon source is preferably a compound that is in a gas form or is readily capable of becoming a gas, selected from an aliphatic hydrocarbon, an aromatic hydrocarbon, an alicyclic hydrocarbon, and derivatives thereof. Specific examples thereof include hydrocarbons, such as methane, ethane, propane, toluene, benzene, xylene, styrene, naphthalene, and anthracene, and derivatives of the hydrocarbons such as cresol. The carbon sources may be used singly, or in a combination of two or more kinds.

There is no particular restriction on the heat treatment temperature for carbonizing a carbon source, insofar as the carbon source can be carbonized at the temperature. The temperature is preferably 500°C or more, more preferably 600°C or more, and further preferably 700°C or more. In view of forming carbon with a low crystallinity, the temperature is preferably 1300°C or less, more preferably 1200°C or less, and further preferably 1100°C or less.

The time for the heat treatment is selected according to the type of the carbon source to be used and the amount thereof, and is preferably, for example, from 0.1 hours to 10 hours, and more preferably from 0.5 hours to 5 hours.

The heat treatment is preferably conducted in an inert atmosphere, such as nitrogen or argon. There is no particular restriction on the heat treatment device, insofar as it is equipped with a heating mechanism, and examples thereof include a device that can performing a heat treatment by a continuous method, a batch method, or the like. Specifically, the heating device may be selected from a fluidized bed reaction oven, a rotary oven, a vertical moving bed reaction oven, a tunnel oven, a batch-wise oven, and the like, according to the purposes.

Since a heat-treated product yielded by the heat treatment may be in a state of an aggregate of individual particles, a disintegrating treatment is preferably conducted. Further, when adjustment to a desired average particle diameter is necessary, a grinding treatment may be conducted.

As an alternative method for applying carbon to a surface of an aluminum silicate, there is a method of using an amorphous carbon such as soft carbon and hard carbon, or a carbonaceous material such as graphite as the carbon. By this method, it is possible to produce an aluminum silicate composite having a structure in which carbon 40 exists as particles on a surface of aluminum silicate 50, as shown in Fig. 10 and Fig. 11. As a method of using the carbonaceous material, the wet mixing method or the dry mixing method may be applied.

When a wet mixing method is applied to the method, particles of a carbonaceous material and a dispersing medium are mixed to prepare a dispersion, and the dispersion is further mixed with an aluminum silicate, such that the dispersion is attached to a surface of aluminum silicate, and this is dried and subjected to a heat treatment. When a binder is used, the following process is also possible. Namely, particles of a carbonaceous material, an organic compound (a compound capable of leaving carbon after a heat treatment) as a binder, and a dispersing medium are mixed to form a mixture, and the mixture is further mixed with an aluminum silicate, so that the mixture is attached to a surface of the aluminum silicate, and this is dried and subjected to a heat treatment, whereby carbon is applied to a surface of the aluminum silicate. There is no particular restriction on the organic compound, insofar as it can leave carbon after the heat treatment. The conditions for the heat treatment when a wet mixing method is applied may be the conditions for the heat treatment for carbonizing the carbon source as described above.

In a case in which a dry mixing method is applied, particles of a carbonaceous material and an aluminum silicate, both are in a solid state, are mixed to form a mixture, and, if necessary, a treatment for applying mechanical energy to the mixture (for example, mechanochemical treatment) is performed to produce a product. In order to generate a silicon crystallite in the aluminum silicate, a heat treatment is preferably conducted also in a case of a dry mixing method. The conditions for the heat treatment when a dry mixing method is applied may be the conditions for the heat treatment for carbonizing the carbon source.

In a case in which an aluminum silicate to be used is produced, the method for producing an aluminum silicate composite may be a production method in which a carbon source is supplied at any of stages in a process for obtaining the aluminum silicate, so that carbon is disposed on a surface of the aluminum silicate, whereby the aluminum silicate composite is obtained. By this production method, a carbon source is supplied to a dispersion of the aluminum silicate after being synthesized or desalted, and the obtained dispersion of the aluminum silicate containing the carbon source may be subjected to a heat treatment for carbonizing the carbon source. By performing the heat treatment to the dispersion containing the carbon source, an aluminum silicate composite with carbon disposed on its surface can be obtained.

When the carbon source is supplied to the dispersion of the aluminum silicate, the content of the carbon source in the dispersion is preferably from 0.005 mass% to 5 mass%, more preferably from 0.01 mass% to 3 mass%, and further preferably from 0.05 mass% to 1.5 mass%. When the content of the carbon source is 0.005 mass% or more, the electrical conductivity of the aluminum silicate composite tends to be improved, and when the same is 5 mass% or less, the metal ion adsorption capacity of the aluminum silicate composite tends to be utilized more effectively.

### Examples

In the following, the invention is described with reference to the Examples. However, the scope of the invention is not limited thereto.

### -Production of aluminum silicate 1-

### [Production Example 1]

To 500 mL of an aqueous solution of aluminum chloride (concentration: 700 mmol/L), 500 mL of an aqueous solution of sodium orthosilicate (concentration: 350 mmol/L) were added and stirred for 30 minutes. To this solution, 330 mL of an aqueous solution of sodium hydroxide (concentration: 1 mol/L) were added to adjust the pH to 6.1.

The solution after adjusting the pH was stirred for 30 minutes, and subjected to centrifugation with SUPREMA 23 (Tomy Seiko Co., Ltd.) as a centrifuge and NA-16 (Tomy Seiko Co., Ltd.) as a standard rotor, at 3000 min⁻¹ (revolutions/min) for 5 minutes. Thereafter, a supernatant was discarded and a gel-like precipitation was redispersed in pure water, such that the volume of the dispersion was equal to the volume of the solution before the centrifugation. The desalting process by centrifugation as described above was performed three times.

The gel-like precipitation obtained after discarding the supernatant at the third desalting process was dispersed in pure water such that the concentration was 60 g/L, and the electroconductivity of the dispersion was measured with F-55 and an electroconductivity cell: 9382-10D (Horiba, Ltd.) at normal temperature (25°C). The result was 1.3 S/m.

To the gel-like precipitation obtained after discarding the supernatant at the third desalting process, 135 mL of hydrochloric acid (concentration: 1 mol/L) were added to adjust the pH to 3.5, and the mixture was stirred for 30 minutes. The silicon atom concentration and the aluminum atom concentration of the solution were measured by an ordinary method with an ICP optical emission spectrophotometer (P-4010, Hitachi, Ltd.). The silicon atom concentration was 213 mmol/L and the aluminum atom concentration was 426 mmol/L.

Subsequently, the solution was placed in a drier and heated at 98 °C for 48 hours (two days).

To the solution after heating (aluminum silicate concentration: 47 g/L), 188 mL of an aqueous solution of sodium hydroxide (concentration: 1 mol/L) were added to adjust the pH to 9.1. The aluminum silicate in the solution was allowed to aggregate by adjusting the pH, and the aggregate was allowed to precipitate by performing the centrifugation in the same manner to the above. After the centrifugation, the supernatant was discarded and pure water was added to the remaining precipitation, such that the volume of the dispersion is equal to the volume before the centrifugation. The desalting process was performed for three times.

The gel-like precipitation obtained after discarding the supernatant at the third desalting process was dispersed in pure water such that the concentration was 60 g/L, and the electroconductivity of the dispersion was measured with F-55and an electroconductivity cell: 9382-10D (Horiba, Ltd.) at normal temperature (25°C). The result was 0.6 S/m.

The gel-like precipitation obtained after discarding the supernatant at the third desalting process was dried at 60°C for 16 hours to obtain 30 g of a powder, which was referred to as Sample A. It was confirmed that Sample A was imogolite from the results of ²⁷Al-NMR, ²⁹Si-NMR, ICP optical emission spectroscopy and powder X-ray diffraction.

### <BET specific surface area, total pore volume and average pore diameter>

The BET specific surface area, the total volume and the average pore diameter of Sample A were measured based on a nitrogen adsorption capacity with a nitrogen adsorption analyzer (AUTOSORB-1, Quantachrome Instruments). A pretreatment as described below was performed prior to the measurement. The measurement was conducted at an evaluation temperature of 77 K and a relative pressure (an equilibrium pressure with respect to a saturated vapor pressure) for the evaluation pressure range of less than 1.

As a pretreatment, an evaluation cell in which 0.05 g of Sample A were placed was subjected to deaeration and heating, under automatic regulation with a vacuum pump. Specifically, the pretreatment was performed by reducing the pressure to 10 Pa or below, heating at 110 °C, maintaining for 3 hours more, and naturally cooling to normal temperature (25°C) while maintaining the reduced pressure.

As a result of the evaluation, the BET specific surface area was 363 m²/g, the total pore volume was 0.22 cm³/g, and the average pore diameter was 2.4 nm.

### <Volume average particle diameter>

The volume average particle diameter of Sample A was measured by the following method. As a result, the volume average particle diameter of Sample A was 5.0 µm.

The evaluation sample (5 mg) was placed in an aqueous solution of a surfactant (0.01 mass%, ETHOMEEN T/15, Lion Corporation), and dispersed with a vibratory stirrer. The obtained dispersion was placed in the sample chamber of a laser diffraction particle size distribution analyzer (SALD-3000J, Shimadzu Corporation) and was circulated with a pump while applying supersonic wave. The measurement was conducted under the following conditions, and a particle diameter (D50%) at an accumulation of 50% in the obtained particle diameter distribution is defined as the volume average particle diameter. The same measurement was conducted in the following Examples.
Light source: red semiconductor laser (690 nm)
Absorbency: 0.10-0.15
Refraction index: 2.00-0.20i

### <²⁷Al-NMR>

The measurement was conducted under the following conditions with a ²⁷Al-NMR analyzer (AV400WB Model, Bruker BioSpin K.K.)

Resonant frequency: 104 MHz
Measuring method: MAS (single pulse)
MAS rotating speed: 10 kHz
Measurement range: 52 kHz
Number of data points: 4,096
Resolution (measurement range / number of data points): 12.7 Hz
Pulse width: 3.0 µsec
Delay time: 2 sec
Reference for chemical shift value: α-alumina as 3.94 ppm
Window function: exponential function
Line broadening coefficient: 10 Hz

The ²⁷Al-NMR spectrum of Sample A is shown in Fig. 1. As shown in Fig. 1, a peak was observed at approximately 3 ppm, and a slight peak was also observed at approximately 55 ppm. The area ratio of the peak at approximately 55 ppm to the peak at approximately 3 ppm (peak at approximately 55 ppm / peak at approximately 3 ppm) was 15%.

### <²⁹Si-NMR>

The measurement was conducted under the following conditions with a ²⁹Si-NMR analyzer (AV400WB Model, Bruker BioSpin K.K.)

Resonant frequency: 79.5 MHz
Measuring method: MAS (single pulse)
MAS rotating speed: 6 kHz
Measurement range: 24 kHz
Number of data points: 2,048
Resolution (measurement range / number of data points): 5.8 Hz
Pulse width: 4.7 µsec
Delay time: 600 sec
Reference for chemical shift value: TMSP-d₄ (sodium 3-(trimethylsilyl)(2,2,3,3-²H₄) propionate) as 1.52 ppm
Window function: exponential function
Line broadening coefficient: 50 Hz

Fig. 2 shows ²⁹Si-NMR spectra of Sample A. As shown in Fig. 2, Sample A had peaks at approximately -78 ppm and at approximately -85 ppm. The areas of the peaks at approximately -78 ppm and at approximately -85 ppm were measured by the aforementioned method. As a result, the area of peak B at approximately -85 ppm was 2.61, when the area of peak A at approximately -78 ppm was 1.00.

### <Element molar ratio Si/Al>

The element molar ratio of Si to Al (Si/Al) was calculated by an ordinary method of ICP emission spectroscopy with an ICP optical emission spectrophotometer (P-4010, Hitachi, Ltd.). The result was 0.5.

### <Powder X-ray diffraction>

The powder X-ray diffraction was performed with an X-ray diffractometer (GEIGERFLEX RAD-2X (product name), Rigaku Corporation) and a CuKa ray of 0.15418 nm in wavelength as the X-ray source. Fig. 3 shows a spectrum of the powder X-ray diffraction of Sample A. As shown in Fig. 3, broad peaks were observed at approximately 2θ = 26.9° and 40.3°. Further, sharp peaks were observed at 2θ = 18.8°, 20.3°, 27.8°, 40.6° and 53.3°. Meanwhile, broad peaks were not observed at approximately 2θ = 20° and 35°.

### <Observation with transmission electron microscope (TEM)>

Fig. 4 shows a photograph of Sample A taken with a transmission electron microscope (TEM) at a magnification of 100,000. The observation was conducted with a transmission electron microscope (H-7100FA, Hitachi High-Technologies Corporation) at an accelerating voltage of 100 kV.

Sample A for the TEM observation was prepared as follows. The solution after the heat treatment and before the final desalting process (aluminum silicate concentration: 47 g/L) was diluted with pure water by 10 times, and subjected to ultrasonication for 5 minutes. Then, the solution is dropped onto a support for preparing a sample for TEM observation, and naturally dried to form a thin film.

As shown in Fig. 4, no tubular objects with 50 nm or more in length were present in Sample A.

### <Moisture content>

Sample A was heated at 120°C at an atmospheric pressure and maintained for 6 hours. Then, the moisture content was measured by a Karl-Fisher method. The result was 3 mass%.

### <Metal ion adsorption capability in water 1>

Metal ion adsorption capability of Sample A was evaluated by ICP emission spectroscopy with an ICP optical emission spectrophotometer (P-4010, Hitachi, Ltd.).

For the evaluation, metal ion solutions each including a metal sulfate of Ni²⁺, Mn²⁺ or Li⁺ with pure water (100 ppm) were prepared. To these meal ion solutions, Sample A was added such that the final concentration thereof was 1.0 mass%, and thoroughly mixed and left to stand. Then, the metal ion concentration of each solution before and after the addition of Sample A was measured with an ICP optical emission spectrophotometer. The results are shown in Table 1.

The concentration after the addition of Sample A was less than 5 ppm in Ni²⁺, and 10 ppm in Mn²⁺. Meanwhile, the concentration of Li⁺ was 90 ppm, indicating that the lithium ions were hardly adsorbed. The results show that Sample A adsorbs Ni²⁺ and Mn²⁺, but adsorbs little Li⁺, indicating that short circuit can be more suppressed in a lithium ion secondary battery in which nickel ions and manganese ions can be unnecessary metal ions.

For references, the following Samples B and C were prepared and meal ion adsorption capability was evaluated.

Activated carbon (Wako Pure Chemical Industries, Ltd., activated carbon, pulverized, particles size: 2 mm to 5 mm) was used as Sample B. Concentrations of metal ions after the addition of Sample B in water were 50 ppm in Ni²⁺, 60 ppm in Mn²⁺ and 100 ppm in Li⁺. The results are shown in Table 1.

Silica gel (Wako Pure Chemical Industries, Ltd., granular (white)) was used as Sample C. Concentrations of metal ions after the addition of Sample C in water were 100 ppm in Ni²⁺, 100 ppm in Mn²⁺ and 80 ppm in Li⁺. The results are shown in Table 1.

**Table 1**

| Samples | | Concentration after addition of sample [ppm] | | |
|---|---|---|---|---|
| | | Ni²⁺ | Mn²⁺ | Li⁺ |
| Sample A | Aluminum Silicate | <5 | 10 | 90 |
| Sample B | Activated Carbon | 50 | 60 | 100 |
| Sample C | Silica Gel | 100 | 100 | 80 |

### <Metal ion adsorption capability in water 2>

Metal ion adsorption capability of Sample A produced in Production Example 1 was evaluated by a method explained in the "metal ion adsorption capability in water 1", while changing the addition amount of Sample A as shown in Table 2.

**Table 2**

| Addition amount of Sample A [mass%] | Mn²⁺ concentration after addition of Sample A [ppm] |
|---|---|
| 0.0 | 100 |
| 0.5 | 50 |
| 2.0 | 5 |

As shown in Table 2, the concentration of manganese ions decreased by half when the concentration of Sample A was 0.5 mass%. Further, 95% of manganese ions were trapped when the concentration of Sample A was 2.0 mass%.

### <Metal ion adsorption capability in water 3>

Metal ion adsorption capability of Sample A produced in Production Example 1 was evaluated by a method explained in the "metal ion adsorption capability in water 1", while changing the type of metal ions to Cu²⁺ and changing the concentration of metal ions to 400 ppm. The pH was 5.1. The concentration of Cu²⁺ after the addition of Sample A was 160 ppm.

### [Production Example 2]

To 500 mL of an aqueous solution of aluminum chloride (concentration: 180 mmol/L), 500 mL of an aqueous solution sodium orthosilicate (concentration: 74 mmol/L) were added and stirred for 30 minutes. To this solution, 93 mL of an aqueous solution of sodium hydroxide (concentration: 1 mol/L) were added to adjust the pH to 7.0.

The solution after adjusting the pH was stirred for 30 minutes, and subjected to centrifugation with SUPREMA 23 (Tomy Seiko Co., Ltd.) as a centrifuge and NA-16 (Tomy Seiko Co., Ltd.) as a standard rotor, at 3000 min⁻¹ (revolutions/min) for 5 minutes. Thereafter, a supernatant was discarded and a gel-like precipitation was redispersed in pure water, such that the volume of the dispersion was equal to the volume of the solution before the centrifugation. The desalting process by centrifugation as described above was performed three times.

The gel-like precipitation obtained after discarding the supernatant at the third desalting process was dispersed in pure water such that the concentration was 60 g/L, and the electroconductivity of the dispersion was measured with F-55 and an electroconductivity cell: 9382-10D (Horiba, Ltd.) at normal temperature (25°C). The result was 1.3 S/m.

To the gel-like precipitation obtained after discarding the supernatant at the third desalting process, 60 mL of hydrochloric acid (concentration: 1 mol/L) were added to adjust the pH to 4.0, and the mixture was stirred for 30 minutes. The silicon atom concentration and the aluminum atom concentration of the solution were measured by an ordinary method with an ICP optical emission spectrophotometer (P-4010, Hitachi, Ltd.). The silicon atom concentration was 2 mmol/L and the aluminum atom concentration was 4 mmol/L.

Subsequently, the solution was placed in a drier and heated at 98 °C for 96 hours (four days).

To the solution after heating (aluminum silicate concentration: 0.4 g/L), 60 mL of an aqueous solution of sodium hydroxide (concentration: 1 mol/L) were added to adjust the pH to 9.0. The aluminum silicate in the solution is allowed to aggregate by adjusting the pH, and the aggregate is allowed to precipitate by performing the centrifugation in the same manner to the first washing process. After the centrifugation, the supernatant was discarded and pure water was added to the remaining precipitation, such that the volume of the dispersion is equal to the volume before the centrifugation. The desalting process was performed for three times.

The gel-like precipitation obtained after discarding the supernatant at the third desalting process was dispersed in pure water such that the concentration was 60 g/L, and the electroconductivity of the dispersion was measured with F-55 and an electoconductivity cell: 9382-10D (Horiba, Ltd.) at normal temperature (25°C). The result was 0.6 S/m.

The gel-like precipitation obtained after the desalting process was dried at 60°C for 72 hours (three days) to obtain 4.8 g of a powder, which was referred to as Sample D.

### <²⁷Al-NMR>

The ²⁷Al-NMR spectrum of Sample B is shown in Fig. 1. As shown in Fig. 1, a peak was observed at approximately 3 ppm, and a slight peak was also observed at approximately 55 ppm. The area ratio of the peak at approximately 55 ppm to the peak at approximately 3 ppm was 4%.

### <²⁹Si-NMR>

The ²⁹Si-NMR spectrum of Sample B is shown in Fig. 2. As shown in Fig. 2, Sample B had peaks at approximately -78 ppm and at approximately -85 ppm. The areas of the peaks at approximately -78 ppm and at approximately -85 ppm were measured by the aforementioned method. As a result, the area of peak B at approximately -85 ppm was 0.44, when the area of peak A at approximately -78 ppm was 1.00.

### <Element molar ratio Si/Al>

The element molar ratio of Si to Al (Si/Al) was calculated by an ordinary method of ICP emission spectroscopy with an ICP optical emission spectrophotometer (P-4010, Hitachi, Ltd.). The result was 0.5.

### <Powder X-ray diffraction>

The powder X-ray diffraction of Sample D was performed by the same method as Production Example 1. Fig. 3 shows a spectrum of the powder X-ray diffraction of Sample D. As shown in Fig. 3, broad peaks were observed at approximately 2θ = 4.8°, 9.7°, 14.0°, 18.3°, 27.3° and 40.8°. Meanwhile, broad peaks were not observed at approximately 2θ = 20° and 35°.

### <BET specific surface area, total pore volume and average pore diameter>

The BET specific surface area, the total volume and the average pore diameter of Sample D were measured by the same methods as Production Example 1.

As a result of the evaluation, the BET specific surface area was 323 m²/g, the total pore volume was 0.22 cm³/g, and the average pore diameter was 2.7 nm.

### <Volume average particle diameter>

The volume average particle diameter of Sample D was measured by the same method as Production Example 1. As a result, the volume average particle diameter of Sample D was 5.0 µm.

### <Observation with transmission electron microscope (TEM)>

Fig. 5 shows a photograph of Sample D taken with a transmission electron microscope (TEM) at a magnification of 100,000 by the same method as Production Example 1. As shown in Fig. 5, tubular objects were observed. The length in the long direction of tubular objects 10a was approximately from 10 nm to 10 µm, the outer diameter was from 1.5 nm to 3.0 nm, and the inner diameter was from 0.7 nm to 1.4 nm.

### <Moisture content>

Sample D was heated at 120°C at an atmospheric pressure and maintained for 6 hours. Then, the moisture content was measured by a Karl-Fisher method. The result was 3 mass%.

### <Metal ion adsorption capability in water>

Metal ion adsorption capability of Sample D produced in Production Example 1 was evaluated by the same method as Production Example 1. As a result, Sample D exhibited a similar metal ion adsorption capability of Sample A.

### [Example 1]

As an aluminum silicate composite, imogolite composite A was produced by using Sample A.

Sample A and a polyvinyl alcohol powder (Wako Pure Chemical Industries, Ltd.) were mixed at a mass ratio of 100:70 and sintered at 850°C in a nitrogen atmosphere for one hour, thereby obtaining imogolite composite A.

The carbon content of imogolite composite A was measured by thermogravimetry-differential thermal analysis (TG-DTA) at a temperature elevation rate of 20°C/min, at 800°C and for 20 minutes to retain. The mass decrease ratio was 10 mass%.

The R value of the imogolite composite A as measured by the following conditions was 1.0. The state of covering a surface of imogolite composite A was determined by performing mapping by Raman spectroscopy. As a result, the area not covered with carbon was very small, and most of the surface was covered with carbon.

The R value was measured by a Raman spectrometer (NSR-1000 Model, Jasco Corporation), and the obtained spectrum was with a base line of the following range. The measurement conditions are as follows.
Laser wavelength: 532 nm
Radiation intensity: 1.5 mW (measured value with a laser power monitor)
Radiation time: 60 seconds
Radiation area: 4 µm²
Measurement range: 830 cm⁻¹ to 1940 cm⁻¹
Base line: 1050 cm⁻¹ to 1750 cm⁻¹

The wavenumber of the spectrum was corrected with a standard curve that was calculated from a difference between a wavenumber of each peak obtained from a standard substance (indene, Wako Pure Chemical Industries, Ltd., first grade) under the same conditions as the above and a theoretical value of wavenumber of each peak of indene.

In the Raman spectrum after the correction, the intensity of a peak that appears at approximately 1350 cm⁻¹ was defined as Id and the intensity of a peak that appears at approximately 1580 cm⁻¹ was defined as Ig, and the R value was calculated as an intensity ratio Id/Ig (D/G).

The mapping was performed under the same conditions, using the same Raman spectrometer as the one used for the measurement of the R value.

The BET specific surface area was measured by the same method as Production Example 1, based on a nitrogen adsorption capability. As a result, the BET specific surface area of imogolite composite A was 10 m²/g. Further, the volume average particle diameter of imogolite composite A was measured. As a result, the volume average particle diameter was 5.0 µm.

### [Example 2]

As an aluminum silicate composite, imogolite composite B was produced by using Sample A.

Sample A was dispersed in an aqueous solution of polyvinyl alcohol (1 mass%) such that the mass ratio of aluminum silicate and a carbon source was 100:70, and dried at 120°C. The solid after drying was pulverized and sintered at 850°C in a nitrogen atmosphere for one hour, thereby obtaining imogolite composite B.

The carbon content of imogolite composite B was measured by thermogravimetry-differential thermal analysis (TG-DTA) at a temperature elevation rate of 20°C/min, at 800°C and for 20 minutes to retain. The mass decrease ratio was 10 mass%.

The R value of imogolite composite B as measured under the same conditions as the above was 1.0. The state of covering a surface of imogolite composite B was determined by performing mapping by Raman spectroscopy. As a result, the area not covered with carbon was very small, and most of the surface was covered with carbon.

The BET specific surface area of imogolite composite B was measured by the same method as Production Example 1, based on a nitrogen adsorption capability. As a result, the BET specific surface area of imogolite composite B was 10 m²/g. Further, the volume average particle diameter of imogolite composite B was measured. As a result, the volume average particle diameter was 30.0 µm.

### [Example 3]

A zeolite composite was prepared as an aluminum silicate composite by the following method.

A commercial product (product name: SP#600, Nitto Funka Kogyo K.K.) was used as the zeolite. The properties of the zeolite were as follows. The BET specific surface area and the element molar ratio Si/Al were measured under the same conditions as Production Example 1.
BET specific surface area: 250 m²/g
Elemental molar ratio Si/Al: 2.8
Volume average particle diameter: 10.0 µm

Sample E was prepared by using the zeolite.

The zeolite and a polyvinyl alcohol powder (Wako Pure Chemical Industries, Ltd.) were mixed at a mass ratio of 100:70 and sintered at 850°C in a nitrogen atmosphere for one hour, thereby obtaining a zeolite composite.

The carbon content of the zeolite composite was measured by thermogravimetry-differential thermal analysis (TG-DTA) at a temperature elevation rate of 20°C/min, at 800°C and for 20 minutes to retain. The mass decrease ratio was 10 mass%.

The R value of the zeolite composite as measured by the following conditions was 1.0. The state of covering a surface of the zeolite composite was determined by performing mapping by Raman spectroscopy. As a result, the area not covered with carbon was very small, and most of the surface was covered with carbon.

The BET specific surface area of the zeolite composite was measured by the same method as Production Example 1, based on a nitrogen adsorption capability. As a result, the BET specific surface area of the zeolite composite was 50 m²/g. Further, the volume average particle diameter of the zeolite composite was measured. As a result, the volume average particle diameter was 10.0 µm.

The zeolite composite was embedded in an epoxy resin, and cured and molded. The cured and molded resin was mechanically polished such that the inside of the zeolite composite was exposed, and the portion corresponding to the inside of the zeolite composite was observed with a scanning electron microscope (SEM), and whether or not carbon was present inside the zeolite composite was confirmed by energy dispersive X-ray spectroscopy (EDX). As a result, existence of carbon inside the particles of the zeolite composite was confirmed. In this process, a high-resolution analysis scanning electron microscope (product name: SU-70, Hitachi High-Technologies Corporation), which is capable of performing energy dispersive X-ray spectroscopy (EDX), was used.

### [Example 4]

An allophane composite was prepared as an aluminum silicate composite by the following method.

A commercial product (product name: SECADO, Shinagawa Chemicals Co., Ltd.) was used as the allophane. The properties of the allophane were as follows. The BET specific surface area and the element molar ratio Si/Al were measured under the same conditions as Production Example 1.
BET specific surface area: 345 m²/g
Elemental molar ratio Si/Al: 0.6
Volume average particle diameter: 13.0 µm

Sample F was prepared by using the allophane by the following method.

The allophane and a polyvinyl alcohol powder (Wako Pure Chemical Industries, Ltd.) were mixed at a mass ratio of 100:70 and sintered at 850°C in a nitrogen atmosphere for one hour, thereby obtaining an allophane composite.

The carbon content of the zeolite composite was measured by thermogravimetry-differential thermal analysis (TG-DTA) at a temperature elevation ratio of 20°C/min, at 800°C and for 20 minutes to retain. The mass decrease ratio was 10 mass%.

The R value of the allophane composite as measured by the following conditions was 1.0. The state of covering a surface of the allophane composite was determined by performing mapping by Raman spectroscopy. As a result, the area not covered with carbon was very small, and most of the surface was covered with carbon.

The BET specific surface area of the allophane composite was measured by the same method as Production Example 1, based on a nitrogen adsorption capability. As a result, the BET specific surface area of the allophane composite was 50 m²/g. Further, the volume average particle diameter of the allophane composite was measured. As a result, the volume average particle diameter was 13.0 µm.

### [Example 5]

A kaolin composite was prepared as an aluminum silicate composite by the following method.

A commercial product (product name: ASP-200, Hayashi-Kasei Co., Ltd.) was used as the kaolin. The properties of the kaolin were as follows. The BET specific surface area and the element molar ratio Si/Al were measured under the same conditions as Production Example 1.
BET specific surface area: 20 m²/g
Elemental molar ratio Si/Al: 0.6
Volume average particle diameter: 4.0 µm

Sample G was prepared by using the kaolin by the following method.

The kaolin and a polyvinyl alcohol powder (Wako Pure Chemical Industries, Ltd.) were mixed at a mass ratio of 100:70 and sintered at 850°C in a nitrogen atmosphere for one hour, thereby obtaining a kaolin composite.

The carbon content of the kaolin composite was measured by thermogravimetry-differential thermal analysis (TG-DTA) at a temperature elevation ratio of 20°C/min, at 800°C and for 20 minutes to retain. The mass decrease ratio was 10 mass%.

The R value of the kaolin composite as measured by the following conditions was 1.0. The state of covering a surface of the kaolin composite was determined by performing mapping by Raman spectroscopy. As a result, the area not covered with carbon was very small, and most of the surface was covered with carbon.

The BET specific surface area of the kaolin composite was measured by the same method as Production Example 1, based on a nitrogen adsorption capability. As a result, the BET specific surface area of the kaolin composite was 5 m²/g. Further, the volume average particle diameter of the kaolin composite was measured. As a result, the volume average particle diameter was 4.0 µm.

### [Example 6]

A saponite composite was prepared as an aluminum silicate composite by the following method.

A commercial product (product name: SUMECTON SA, Kunimine Industries Co., Ltd.) was used as the saponite. The properties of the saponite were as follows. The BET specific surface area and the element molar ratio Si/Al were measured under the same conditions as Production Example 1.
BET specific surface area: 256 m²/g
Elemental molar ratio Si/Al: 11
Volume average particle diameter: 38.0 µm

Sample H was prepared by using the saponite by the following method.

The saponite and a polyvinyl alcohol powder (Wako Pure Chemical Industries, Ltd.) were mixed at a mass ratio of 100:70 and sintered at 850°C in a nitrogen atmosphere for one hour, thereby obtaining a saponite composite.

The carbon content of the saponite composite was measured by thermogravimetry-differential thermal analysis (TG-DTA) at a temperature elevation ratio of 20°C/min, at 800°C and for 20 minutes to retain. The mass decrease ratio was 10 mass%.

The R value of the saponite composite as measured by the following conditions was 1.0. The state of covering a surface of the saponite composite was determined by performing mapping by Raman spectroscopy. As a result, the area not covered with carbon was very small, and most of the surface was covered with carbon.

The BET specific surface area of the saponite composite was measured by the same method as Production Example 1, based on a nitrogen adsorption capability. As a result, the BET specific surface area of the saponite composite was 38 m²/g. Further, the volume average particle diameter of the saponite composite was measured. As a result, the volume average particle diameter was 38.0 µm.

The saponite composite was embedded in an epoxy resin, and cured and molded. The cured and molded resin was mechanically polished such that the inside of the saponite composite was exposed, and the portion corresponding to the inside of the saponite composite was observed with a scanning electron microscope (SEM), and whether or not carbon was present inside the zeolite composite was confirmed by energy dispersive X-ray spectroscopy (EDX). As a result, existence of carbon inside the particles of the saponite composite was confirmed. In this process, a high-resolution analysis scanning electron microscope (product name: SU-70, Hitachi High-Technologies Corporation), which is capable of performing energy dispersive X-ray spectroscopy (EDX), was used.

### [Example 7]

A montmorillonite composite was prepared as an aluminum silicate composite by the following method.

A commercial product (product name: KUNIPIA, Kunimine Industries Co., Ltd.) was used as the montmorillonite. The properties of the montmorillonite were as follows. The BET specific surface area and the element molar ratio Si/Al were measured under the same conditions as Production Example 1.
BET specific surface area: 20 m²/g
Elemental molar ratio Si/Al: 2.4
Volume average particle diameter: 3.0 µm

Sample I was prepared by using the montmorillonite by the following method.

The montmorillonite and a polyvinyl alcohol powder (Wako Pure Chemical Industries, Ltd.) were mixed at a mass ratio of 100:70 and sintered at 850°C in a nitrogen atmosphere for one hour, thereby obtaining a montmorillonite composite.

The carbon content of the montmorillonite composite was measured by thermogravimetry-differential thermal analysis (TG-DTA) at a temperature elevation ratio of 20°C/min, at 800°C and for 20 minutes to retain. The mass decrease ratio was 10 mass%.

The R value of the montmorillonite composite as measured by the following conditions was 1.0. The state of covering a surface of the montmorillonite composite was determined by performing mapping by Raman spectroscopy. As a result, the area not covered with carbon was very small, and most of the surface was covered with carbon.

The BET specific surface area of the montmorillonite composite was measured by the same method as Production Example 1, based on a nitrogen adsorption capability. As a result, the BET specific surface area of the montmorillonite composite was 10 m²/g. Further, the volume average particle diameter of the montmorillonite composite was measured. As a result, the volume average particle diameter was 3.0 µm.

### [Example 8]

An attapulgite composite was prepared as an aluminum silicate composite by the following method.

A commercial product (product name: ATTAGEL 50, Hayashi-Kasei Co., Ltd.) was used as the attapulgite. The properties of the attapulgite were as follows. The BET specific surface area and the element molar ratio Si/Al were measured under the same conditions as Production Example 1.
BET specific surface area: 150 m²/g
Elemental molar ratio Si/Al: 2.7
Volume average particle diameter: 3.0 µm

Sample J was prepared by using the attapulgite by the following method.

The attapulgite and a polyvinyl alcohol powder (Wako Pure Chemical Industries, Ltd.) were mixed at a mass ratio of 100:70 and sintered at 850°C in a nitrogen atmosphere for one hour, thereby obtaining an attapulgite composite.

The carbon content of the attapulgite composite was measured by thermogravimetry-differential thermal analysis (TG-DTA) at a temperature elevation ratio of 20°C/min, at 800°C and for 20 minutes to retain. The mass decrease ratio was 10 mass%.

The R value of the attapulgite composite as measured by the following conditions was 1.0. The state of covering a surface of the attapulgite composite was determined by performing mapping by Raman spectroscopy. As a result, the area not covered with carbon was very small, and most of the surface was covered with carbon.

The BET specific surface area of the attapulgite composite was measured by the same method as Production Example 1, based on a nitrogen adsorption capability. As a result, the BET specific surface area of the attapulgite composite was 30 m²/g. Further, the volume average particle diameter of the attapulgite composite was measured. As a result, the volume average particle diameter was 3.0 µm.

### [Evaluation 1]

The imogolite composite A and the imogolite composite B as prepared in Examples 1 and 2 were evaluated by powder X-ray diffraction. For the comparison, Sample A before covering with carbon and a sintered product of Sample A (sintered product A), which was prepared by subjecting Sample A to a heat treatment in a nitrogen atmosphere at 850°C for 1 hour, were used.

Fig. 12 shows the result of the powder X-ray diffraction. In Fig. 12, the black circles refer to peaks representing an amorphous aluminum silicate, the black triangles refer to peaks representing a bayerite structure, and the black squares refer to a mullite structure, respectively.

As shown in Fig. 12, no peaks representing a mullite structure were observed in the imogolite composite A and the imogolite composite B, indicating that a structure deriving from an amorphous aluminum silicate was maintained.

In the sintered product A, no peaks representing a bayerite structure or a structure deriving from an amorphous aluminum silicate were observed, indicating that the sintered product A had a mullite structure but did not have a structure deriving from an amorphous aluminum silicate.

The BET specific surface area of the sintered product of Sample A was measured by the same method as Production Example 1, based on a nitrogen adsorption capability. As a result, the BET specific surface area of the sintered product of Sample A was 5 m²/g. Further, the volume average particle diameter of the sintered product of Sample A was measured. As a result, the volume average particle diameter was 5.0 µm.

### [Evaluation 2]

Metal ion absorption capability of the imogolite composite A, the imogolite composite B, the zeolite composite, the allophane composite, the kaolin composite, the saponite composite, the montmorillonite composite and the attapulgite composite, as prepared in Examples 1 to 8, were evaluated by the following method.

For comparison, Sample A, sintered product of Sample A, acetylene black (HS-100, Denka Company Limited, BET specific surface area: 38 m²/g, volume average particle diameter: 2.0 µm), and the zeolite, allophane, kaolin, saponite, montmorillonite and attapulgite used in Examples 3 to 8, were used.

### (1) Amount of water adsorption

The amount of water adsorption was calculated as a change in mass from a mass after subjecting the sample to vacuum drying at 130°C for 3 hours to a mass after leaving the sample after the vacuum drying for 24 hours at 20°C with a humidity of from 90% to 99%. The results are shown in Table 3.

### (2) Metal (Mn) ion adsorption capability in an electrolyte

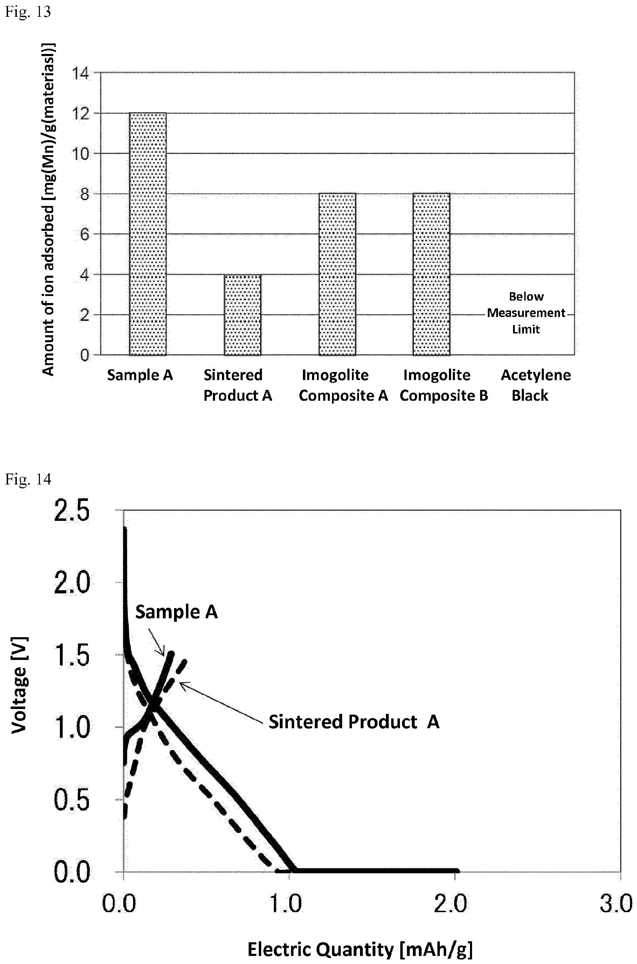

An electrolyte containing 1M LiPF₆ with a volume ratio of ethylene carbonate (EC): dimethyl carbonate (DMC) : diethyl carbonate (DEC) of 1:1:1 was prepared, and Mn(BF₄)₂ was dissolved therein, thereby preparing a Mn solution (500 ppm). To this Mn solution, each sample was added by 0.05 g, and stirred for 30 minutes and left to stand at room temperature. Thereafter, a supernatant was filtrated with a filter with a pore size of 0.45 µm, and the adsorption amount of Mn ions was measured with an ICP optical emission spectrophotometer (ICP-AES). The results are shown in Table 3 and Fig. 13.

**[Table 3]**

| | Materials | Carbon application | Amount of water adsorption (%) | Amount of Mn adsorption (mg/g) |
|---|---|---|---|---|
| Example 1 | Imogolite Composite A | Applied | 1.6 | 8 |
| Example 2 | Imogolite Composite B | Applied | 1.6 | 8 |
| Example 3 | Zeolite Composite | Applied | 2.9 | 9 |
| Example 4 | Allophane Composite | Applied | 7.5 | 7 |
| Example 5 | Kaolin Composite | Applied | 0.4 | 4 |
| Example 6 | Saponite Composite | Applied | 5.7 | 3 |
| Example 7 | Montmorillonite Composite | Applied | 5.0 | 4 |
| Example 8 | Attapulgite Composite | Applied | 3.0 | 4 |
| Comparative | Sample A (Imogolite) | Not applied | 15.1 | 12 |
| Comparative | Zeolite | Not applied | 12.3 | 6 |
| Comparative | Allophane | Not applied | 27.4 | 10 |
| Comparative | Kaolin | Not applied | 3.8 | 8 |
| Comparative | Saponite | Not applied | 26.4 | 12 |
| Comparative | Montmorillonite | Not applied | 20.0 | 6 |
| Comparative | Attapulgite | Not applied | 12.0 | 5 |
| Comparative | Sintered product A | Not applied | 1.1 | 4 |
| Comparative | Acetylene Black | Not applied | 0.1 | 0 |

As shown in Table 3 and Fig. 13, the imogolite composite A, the imogolite composite B, the zeolite composite, the allophane composite, the kaolin composite, the saponite composite, the montmorillonite composite and the attapulgite composite exhibited a lower amount of water adsorption, as compared with the corresponding aluminum silicates before covering with carbon. The imogolite composite A and the imogolite composite B exhibited a favorable metal ion adsorption capability, as compared with the acetylene black and the sintered product A.

Further, the imogolite composite A, the imogolite composite B, the zeolite composite, the allophane composite, the kaolin composite, the saponite composite, the montmorillonite composite and the attapulgite composite maintained a metal ion adsorption capability even if carbon is disposed on a surface thereof.

### [Evaluation 3]

The following evaluations were performed on the imogolite composite A, the imogolite composite B, the zeolite composite, the allophane composite, the kaolin composite, the saponite composite, the montmorillonite composite and the attapulgite composite, as prepared in Examples 1 to 8.

For comparison, Sample A, the sintered product A, acetylene black (HS-100, Denka Company Limited, BET specific surface area: 38 m²/g, volume average particle diameter: 2.0 µm) and the zeolite, allophane, kaolin, saponite, montmorillonite and attapulgite used in Examples 3 to 8, were used.

### (1) Powder resistivity and electroconductivity

The powder resistivity and the electroconductivity were measured with 3 g of each sample as shown in Table 4 by a powder resistivity measurement system (LORESTA GP, Mitsubishi Chemical Analytech Co., Ltd.) at a pressure of 3,842 N/cm² (382 Kgf/cm²). The results are shown in Table 4.

**[Table 4]**

| Materials | Powder Resistivity [Ω·cm] | Electroconductivity [S/cm] |
|---|---|---|
| Sample A (Imogolite) | 6 x 10⁵ | 20 x 10⁻⁷ |
| Sintered product A (Imogolite) | 38 x 10⁵ | 3 x 10⁻⁷ |
| Imogolite Composite A | 3.7 | 0.3 |
| Imogolite Composite B | 3.4 | 0.3 |
| Acetylene Black | 0.1 | 7.1 |
| Zeolite | >10⁷ | <10⁻⁷ |
| Zeolite Composite | 1.5 x 10² | 7.0 x 10⁻³ |
| Allophane | >10⁷ | <10⁻⁷ |
| Allophane Composite | 5.6 | 1.8 x 10⁻¹ |
| Kaolin | >1⁰⁷ | <10⁻⁷ |
| Kaolin Composite | 6.8 | 1.6 x 10⁻¹ |
| Saponite | > 10⁷ | <10⁻⁷ |
| Saponite Composite | 4.2 x 10² | 2.6 x 10⁻³ |
| Montmorillonite | 5 x 10⁶ | 2x 10⁻⁷ |
| Montmorillonite Composite | 2 x 10² | 5 x 10⁻³ |
| Attapulgite | 1 x 10⁷ | 1 x 10⁻⁷ |
| Attapulgite Composite | 3 x 10³ | 3 x 10⁻⁴ |

As shown in Table 4, the imogolite composite A and the imogolite B exhibit a relatively higher electroconductivity, as compared with Sample A not having carbon on a surface thereof.

Also, the allophane composite, the kaolin composite, the saponite composite, the montmorillonite composite and the attapulgite composite exhibited a lower powder resistivity and a higher electroconductivity, each having carbon on a surface thereof, as compared with the allophane, kaolin, saponite, montmorillonite and attapulgite.

### (2) Charge-and-discharge characteristics

A slurry was prepared by adding 10 parts by mass of polyvinylidene fluoride (PVDF) to 90 parts by mass of Sample A, the sintered product A, the imogolite composite A, the imogolite composite B or acetylene black, respectively, and mixing and kneading with N-methyl-2-pyrrolidone (NMP). The obtained slurry was applied onto a copper foil, and an electrode was prepared by drying at 105°C for 30 minutes and pressing.

A coin cell (half cell) was prepared by positioning the electrode as prepared as a negative electrode so as to face a metal lithium as a counter electrode via a polypropylene separator (thickness: 20 µm), and infusing an electrolyte.

The electrolyte was prepared by dissolving LiPF₆ at a concentration of 1 mol/L and vinylene carbonate at a concentration of 0.5 mass% to a mixed solvent of ethyl carbonate and methyl ethyl carbonate (volume ratio: 7 to 3).

Each cell was placed in a thermostat bath at 25°C, and a charge-and-discharge test was performed. The charging was performed by charging at a current of 0.1 mA until 0.005 V, and intercalating Li to the acting electrode at a voltage of 0.005 V until the current value became 0.01 mA. The discharge was performed by releasing Li to an acting electrode at a current of 0.1 mA to a voltage value of 1.5 V. The discharge capacity and the charge-and-discharge efficiency were used as the result of the charge-and-discharge test.

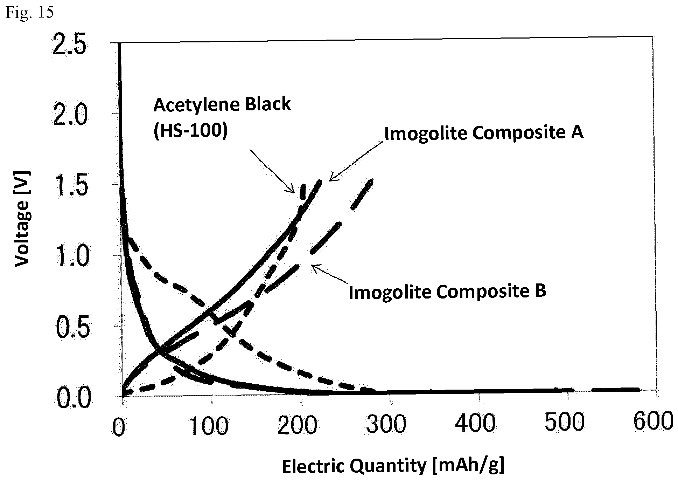

The results are shown in Figs. 14 and 15. In Fig. 14, the solid line indicates Sample A and the dashed line indicates the sintered product of Sample A. In Fig. 15, the solid line indicates the imogolite composite A, the cashed line indicates the imogolite composite B, and the dotted line indicates acetylene black.

As shown in Fig. 14 and Fig. 15, although the initial discharge capacity of Sample A and the sintered product A were from 0.3 mAh/g to 0.4 mAh/g, the initial discharge capacity of the imogolite composite A and the imogolite composite B, which were covered with carbon by a dry phase method or a wet phase method, were from 220 mAh/g to 280 mAh/g, which were higher than 205 mAh/g of acetylene black.

### (3) Storage test

### (Addition to negative electrode)

A slurry was prepared by adding, to 5 parts by mass of the imogolite composite A, 1 part by mass of acetylene black, 3 parts by mass of polyvinylidene fluloride (PVFD) and 91 parts by mass of graphite, and mixing and kneading the same with N-methyl-2-pyrrolidone (NMP). The obtained slurry was applied onto a copper foil, and a negative electrode A was prepared by drying at 105°C for 30 minutes and pressing.

For comparison, a negative electrode X was prepared by adding 1 part by mass of acetylene black, 3 parts by mass of polyvinylidene fluloride (PVFD) and 96 parts by mass of graphite, and mixing and kneading the same with N-methyl-2-pyrrolidone (NMP).

A slurry was prepared by mixing 8 parts by mass of acetylene black, 6 parts by mass of polyvinylidene fluloride (PVFD) and 86 parts by mass of a spinel-type manganese (lithium manganese), and mixing and kneading the same with N-methyl-2-pyrrolidone (NMP). The obtained slurry was applied onto an aluminum foil, and a positive electrode X was prepared by drying at 105°C for 30 minutes and pressing.

The negative electrode A or the negative electrode X and the positive electrode X were vacuum-dried at 130°C for 6 hours, and a coin cell was prepared by positioning the negative electrode and the positive electrode to face each other via a polypropylene separator (thickness: 20 µm), and infusing an electrolyte.

The electrolyte was prepared by dissolving LiPF₆ at a concentration of 1 mol/L and vinylene carbonate at a concentration of 0.5 mass% to a mixed solvent of ethyl carbonate and methyl ethyl carbonate (volume ratio: 7 to 3).

The coin cell prepared by using the negative electrode A and the positive electrode X was referred to as Cell A-1, and the coin cell prepared by using the negative electrode X and the positive electrode X was referred to a standard cell.

### (Addition to positive electrode)

A slurry was prepared by adding, to 3 parts by mass of the imogolite composite A, 5 part by mass of acetylene black, 6 parts by mass of polyvinylidene fluloride (PVFD) and 86 parts by mass of a spinel-type manganese (lithium manganese), and mixing and kneading the same with N-methyl-2-pyrrolidone (NMP). The obtained slurry was applied onto an aluminum foil, and the positive electrode A was prepared by drying at 105°C for 30 minutes and pressing. As a negative electrode, the negative electrode X was used.

The negative electrode and the positive Electrode were vacuum-dried at 130°C for 6 hours, and a coin cell was prepared by positioning the negative electrode and the positive electrode to face each other via a polypropylene separator (thickness: 20 µm), and infusing an electrolyte.

The electrolyte was prepared by dissolving LiPF₆ at a concentration of 1 mol/L and vinylene carbonate at a concentration of 0.5 mass% to a mixed solvent of ethyl carbonate and methyl ethyl carbonate (volume ratio: 7 to 3). The coin cell prepared by using the positive electrode A and the negative electrode X was referred to as Cell C-1.

### (Storage conditions)

After placing Cell A-1, Cell C-1 and the standard cell in a thermostat bath at 25°C, charging was performed at a constant voltage of 4.2 V and a constant current of 0.46 mA until 0.0046 V, and discharging was performed at a current of 0.46 mA until 2.7 V. Subsequently, the cells were charged at a constant voltage of 4.2 V and a constant current of 0.46 mA until 0.0046 V, thereby obtaining a charge capacity (initial charge capacity before still-standing).

The cells after being charged were placed in a thermostat bath at 60°C for 7 days to stand still. Thereafter, the cells were allowed to discharge at a current of 0.46 mA until 2.7 V, thereby obtaining a discharge capacity (initial discharge capacity after 7-day still-standing).

The capacity maintenance ratio was calculated by (initial discharge capacity after 7-day still-standing) / (initial charge capacity before still-standing).

As a result, the capacity maintenance ratio of Cell A-1 was improved by 0.5% as compared with the standard cell. The capacity maintenance ratio of Cell C-1 was improved by 5.0% as compared with the standard cell.

In view of the above, it was found that the capacity maintenance ratio is improved by adding an imogolite complex to a negative electrode or a positive electrode of a lithium ion secondary battery, as compared with the case in which an imogolite complex is not added.

Cell A-2 and Cell C-2 were prepared by the same manner as Cell A-1 and Cell C-1, except that the imogolite A was changed to the imogolite B.

The charge capacity (initial charge capacity before still-standing), the discharge capacity (initial discharge capacity after 7-day still-standing) and the charge maintenance ratio (initial discharge capacity after 7-day still-standing) / (initial charge capacity before still-standing) of Cell A-2 and Cell C-2 were measured in the same manner as described above.

As a result, the capacity maintenance ratio of Cell A-2 was improved by 0.5% as compared with the standard cell. The capacity maintenance ratio of Cell C-2 was improved by 5.0% as compared with the standard cell.

The charge-and-discharge test and the storage test were conducted on the zeolite composite, the allophane composite, the kaolin composite, the saponite composite, the montmorillonite composite and the attapulgite composite as prepared in Examples 3 to 8, in the same manner as the above.

The results of the initial discharge capacity of zeolite, allophane, kaolin composite, saponite, montmorillonite and attapulgite were from 0.3 mAh/g to 0.4 mAh/g.

Meanwhile, the results of the initial discharge capacity of the zeolite composite, the allophane composite, the kaolin composite, the saponite composite, the montmorillonite composite and the attapulgite composite was from 220 mAh/g to 280 mAh/g, respectively, which was higher than 205 mAh/g of acetylene black.

Cells C-3, C-4, C-5, C-6, C-7 and C-8, in which the zeolite composite, the allophane composite, the kaolin composite, the saponite composite, the montmorillonite composite and the attapulgite composite were used for the positive electrode, were prepared and the capacity maintenance ratio of the cells was evaluated.

As a result, the capacity maintenance ratio was improved by 5% in cell C-3, by 5% in cell C-4, by 3% in cell C-5, by 3% in cell C-6, by 5% in cell C-7 and by 5% in cell C-8, with respect to the standard cell.

Cells A-3, A-4, A-5, A-6, A-7 and A-8, in which the zeolite composite, the allophane composite, the kaolin composite, the saponite composite, the montmorillonite composite and the attapulgite composite were used for the negative electrode, were prepared and the capacity maintenance ratio of the cells was evaluated.

As a result, the capacity maintenance ratio was improved by 0.5% in cell A-3, by 0.5% in cell A-4, by 0.3% in cell A-5, by 0.3% in cell A-6, by 0.5% in cell A-7 and by 0.5% in cell A-8, with respect to the standard cell.

In view of the above, it was found that the capacity maintenance ratio is improved by adding an aluminum silicate composite of the aforementioned kind to a negative electrode or a positive electrode of a lithium ion secondary battery, as compared with a case in which the aluminum silicate composite is not added.

As shown in the results, since the aluminum silicate composite of the invention has a low amount of water adsorption by ion exchange property of Si and Al and addition of carbon, for example, the aluminum silicate composite is suitably applied to an air purification filter, a water treatment material, a light absorption film, an electromagnetic wave shield film, a semiconductor encapsulation material, and an electronic component material.

Further, the aluminum silicate composite, which exhibits both ion exchange property due to Si and Al and conductivity due to carbon, can improve the electrical characteristics and the lifetime characteristics of a battery of a conductive material containing the aluminum silicate composite. Accordingly, the invention can provide a conductive material that can improve the electrical characteristics and the lifetime characteristics of a battery, such as a lithium ion secondary battery.

## Claims

1. An aluminum silicate composite that comprises an aluminum silicate and carbon that is disposed on a surface of the aluminum silicate, wherein the aluminum silicate composite has an R value of from 0.3 to 3.0, with the R value being an intensity ratio Id/Ig (D/G) where Id refers to an intensity of a peak that appears at approximately 1360 cm⁻¹ and Ig refers to an intensity of a peak that appears at approximately 1580 cm⁻¹ in a Raman spectrum obtained by laser Raman spectrometry with an excitation wavelength of 532 nm.

2. The aluminum silicate composite according to claim 1, wherein a content of the carbon is from 0.1 mass% to 50 mass%.

3. The aluminum silicate composite according to claim 1 or 2, wherein an element molar ratio Si/Al, of silicon (Si) to aluminum (Al), is from 0.1 to 500.

4. An electro conductive material including an aluminum silicate composite that comprises an aluminum silicate and carbon that is disposed on a surface of the aluminum silicate, wherein the aluminum silicate composite has an R value of from 0.3 to 3.0, with the R value being an intensity ratio Id/Ig (D/G) where Id refers to an intensity of a peak that appears at approximately 1360 cm⁻¹ and Ig refers to an intensity of a peak that appears at approximately 1580 cm⁻¹ in a Raman spectrum obtained by laser Raman spectrometry with an excitation wavelength of 532 nm.

5. The electroconductive material according to claim 4, wherein a content of the carbon in the aluminum silicate composite is from 0.1 mass% to 50 mass%.

6. The electroconductive material according to claim 4 or 5, wherein a powder resistivity of the aluminum silicate composite is from 0.001 Ω ▪ cm to 100 Ω ▪ cm.

7. The electroconductive material according to any one of claims 4 to 6, wherein an element molar ratio Si/Al, of silicon (Si) to aluminum (Al), of the aluminum silicate composite is from 0.1 to 500.

8. An electro conductive material for a lithium ion secondary battery, the electroconductive material comprising an aluminum silicate composite that comprises an aluminum silicate and carbon that is disposed on a surface of the aluminum silicate, wherein the aluminum silicate composite has an R value of from 0.3 to 3.0, with the R value being an intensity ratio Id/Ig (D/G) where Id refers to an intensity of a peak that appears at approximately 1360 cm⁻¹ and Ig refers to an intensity of a peak that appears at approximately 1580 cm⁻¹ in a Raman spectrum obtained by laser Raman spectrometry with an excitation wavelength of 532 nm.

9. The electroconductive material for a lithium ion secondary battery according to claim 8, wherein a content of the carbon in the aluminum silicate composite is from 0.1 mass% to 50 mass%.

10. The electroconductive material for a lithium ion secondary battery according to claim 8 or 9, wherein a powder resistivity of the aluminum silicate composite is from 0.001 Ω ▪ cm to 100 Ω ▪ cm.

11. The electroconductive material for a lithium ion secondary battery according to any one of claims 8 to 10, wherein an element molar ratio Si/Al, of silicon (Si) to aluminum (Al), of the aluminum silicate composite is from 0.1 to 500.

12. A composition for forming a negative electrode for a lithium ion secondary battery, the composition comprising the electroconductive material for a lithium ion secondary battery according to any one of claims 8 to 11, a negative electrode active material, and a binder.

13. A composition for forming a positive electrode for a lithium ion secondary battery, the composition comprising the electroconductive material for a lithium ion secondary battery according to any one of claims 8 to 11, a positive electrode active material, and a binder.

14. A negative electrode for a lithium ion secondary battery, the negative electrode comprising a current collector and a negative electrode layer that is disposed on the current collector, the negative electrode layer comprising the electroconductive material for a lithium ion secondary battery according to any one of claims 8 to 11 and a negative electrode active material.

15. A positive electrode for a lithium ion secondary battery, the positive electrode comprising a current collector and a positive electrode layer that is disposed on the current collector, the positive electrode layer comprising the electro conductive material for a lithium ion secondary battery according to any one of claims 8 to 11 and a positive electrode active material.

16. A lithium ion secondary battery that comprises at least one of the negative electrode for a lithium ion secondary battery according to claim 14 or the positive electrode for a lithium ion secondary battery according to claim 15.

## Patentansprüche

1. Aluminiumsilikat-Verbundmaterial, umfassend ein Aluminiumsilikat und Kohlenstoff, der auf der Oberfläche des Aluminiumsilikats angeordnet ist, worin das Aluminiumsilikat-Verbundmaterial einen R-Wert von 0,3 bis 3,0 aufweist und der R-Wert ein Intensitätsverhältnis Id/Ig (D/G) darstellt, worin sich Id auf eine Intensität eines Peaks in einem Ramanspektrum bezieht, der bei ungefähr 1360 cm⁻¹ auftritt, und Ig sich auf eine Intensität eines Peaks bezieht, der bei ungefähr 1580 cm⁻¹ auftritt, erhalten mittels Laser-Raman-Spektrometrie mit einer Anregungswellenlänge von 532 nm.

2. Aluminiumsilikat-Verbundmaterial gemäß Anspruch 1, worin ein Gehalt an Kohlenstoff 0,1 Massen-% bis 50 Massen-% beträgt.

3. Aluminiumsilikat-Verbundmaterial gemäß Anspruch 1 oder 2, worin ein elementares Molverhältnis Si/Al von Silicium (Si) zu Aluminium (Al) 0,1 bis 500 beträgt.

4. Elektrisch leitfähiges Material, das ein Aluminiumsilikat-Verbundmaterial enthält, umfassend ein Aluminiumsilikat und Kohlenstoff, der auf der Oberfläche des Aluminiumsilikats angeordnet ist, worin das Aluminiumsilikat-Verbundmaterial einen R-Wert von 0,3 bis 3,0 aufweist und der R-Wert ein Intensitätsverhältnis Id/Ig (D/G) darstellt, worin sich Id auf eine Intensität eines Peaks in einem Ramanspektrum bezieht, der bei ungefähr 1360 cm⁻¹ auftritt, und Ig sich auf eine Intensität eines Peaks bezieht, der bei ungefähr 1580 cm⁻¹ auftritt, erhalten mittels Laser-Raman-Spektrometrie mit einer Anregungswellenlänge von 532 nm.

5. Elektrisch leitfähiges Material gemäß Anspruch 4, worin ein Gehalt an Kohlenstoff im Aluminiumsilikat-Verbundmaterial 0,1 Massen-% bis 50 Massen-% beträgt.

6. Elektrisch leitfähiges Material gemäß Anspruch 4 oder 5, worin ein Pulverwiderstand des Aluminiumsilikat-Verbundmaterials 0,001 Ω · cm bis 100 Ω · cm beträgt.

7. Elektrisch leitfähiges Material gemäß mindestens einem der Ansprüche 4-6, worin ein elementares Molverhältnis Si/Al von Silicium (Si) zu Aluminium (Al) des Aluminiumsilikat-Verbundmaterials 0,1 bis 500 beträgt.

8. Elektrisch leitfähiges Material für eine sekundäre Lithiumionenbatterie, das elektrisch leitfähige Material umfassend ein Aluminiumsilikat-Verbundmaterial, das ein Aluminiumsilikat und Kohlenstoff umfasst, der auf der Oberfläche des Aluminiumsilikats angeordnet ist, worin das Aluminiumsilikat-Verbundmaterial einen R-Wert von 0,3 bis 3,0 aufweist und der R-Wert ein Intensitätsverhältnis Id/Ig (D/G) darstellt, worin sich Id auf eine Intensität eines Peaks in einem Ramanspektrum bezieht, der bei ungefähr 1360 cm⁻¹ auftritt, und Ig sich auf eine Intensität eines Peaks bezieht, der bei ungefähr 1580 cm⁻¹ auftritt, erhalten mittels Laser-Raman-Spektrometrie mit einer Anregungswellenlänge von 532 nm.

9. Elektrisch leitfähiges Material für eine sekundäre Lithiumionenbatterie gemäß Anspruch 8, worin ein Gehalt an Kohlenstoff im Aluminiumsilikat-Verbundmaterial 0,1 Massen-% bis 50 Massen-% beträgt.

10. Elektrisch leitfähiges Material für eine sekundäre Lithiumionenbatterie gemäß Anspruch 8 oder 9, worin ein Pulverwiderstand des Aluminiumsilikat-Verbundmaterials 0,001 Ω · cm bis 100 Ω · cm beträgt.

11. Elektrisch leitfähiges Material für eine sekundäre Lithiumionenbatterie gemäß mindestens einem der Ansprüche 8 bis 10, worin ein elementares Molverhältnis Si/Al von Silicium (Si) zu Aluminium (Al) des Aluminiumsilikat-Verbundmaterials 0,1 bis 500 beträgt.

12. Zusammensetzung zur Bildung einer negativen Elektrode für eine sekundäre Lithiumionenbatterie, die Zusammensetzung umfassend das elektrisch leitfähige Material für eine sekundäre Lithiumionenbatterie gemäß mindestens einem der Ansprüche 8 bis 11, ein negatives Elektrodenaktivmaterial und ein Bindemittel.

13. Zusammensetzung zur Bildung einer positiven Elektrode für eine sekundäre Lithiumionenbatterie, die Zusammensetzung umfassend das elektrisch leitfähige Material für eine sekundäre Lithiumionenbatterie gemäß mindestens einem der Ansprüche 8 bis 11, ein positives Elektrodenaktivmaterial und ein Bindemittel.

14. Negative Elektrode für eine sekundäre Lithiumionenbatterie, die negative Elektrode umfassend einen Stromabnehmer und eine negative Elektrodenschicht, die auf dem Stromabnehmer angeordnet ist, die negative Elektrodenschicht umfassend das elektrisch leitfähige Material für eine sekundäre Lithiumionenbatterie gemäß mindestens einem der Ansprüche 8 bis 11 und ein negatives Elektrodenaktivmaterial.

15. Positive Elektrode für eine sekundäre Lithiumionenbatterie, die positive Elektrode umfassend einen Stromabnehmer und eine positive Elektrodenschicht, die auf dem Stromabnehmer angeordnet ist, die positive Elektrodenschicht umfassend das elektrisch leitfähige Material für eine sekundäre Lithiumionenbatterie gemäß mindestens einem der Ansprüche 8 bis 11 und ein positives Elektrodenaktivmaterial.

16. Sekundäre Lithiumionenbatterie, die mindestens die negative Elektrode für eine sekundäre Lithiumionenbatterie gemäß Anspruch 14 oder die positive Elektrode für eine sekundäre Lithiumionenbatterie gemäß Anspruch 15 umfasst.

## Revendications

1. Composite de silicate d'aluminium qui comprend un silicate d'aluminium et du carbone qui est disposé sur une surface du silicate d'aluminium, dans lequel le composite de silicate d'aluminium a une valeur R de 0,3 à 3,0, la valeur R étant un rapport d'intensité Id/Ig (D/G) où Id fait référence à une intensité d'un pic qui apparaît à approximativement 1360 cm⁻¹ et Ig fait référence à une intensité d'un pic qui apparaît à approximativement 1580 cm⁻¹ dans un spectre Raman obtenu par spectrométrie Raman au laser avec une longueur d'onde d'excitation de 532 nm.

2. Composite de silicate d'aluminium selon la revendication 1, dans lequel une teneur du carbone est de 0,1 % en masse à 50 % en masse.

3. Composite de silicate d'aluminium selon la revendication 1 ou 2, dans lequel un rapport molaire d'élément Si/AI, entre le silicium (Si) et l'aluminium (Al), est de 0,1 à 500.

4. Matériau électroconducteur comportant un composite de silicate d'aluminium qui comprend un silicate d'aluminium et du carbone qui est disposé sur une surface du silicate d'aluminium, dans lequel le composite de silicate d'aluminium a une valeur R de 0,3 à 3,0, la valeur R étant un rapport d'intensité Id/Ig (D/G) où Id fait référence à une intensité d'un pic qui apparaît à approximativement 1360 cm⁻¹ et Ig fait référence à une intensité d'un pic qui apparaît à approximativement 1580 cm⁻¹ dans un spectre Raman obtenu par spectrométrie Raman au laser avec une longueur d'onde d'excitation de 532 nm.

5. Matériau électroconducteur selon la revendication 4, dans lequel une teneur du carbone dans le composite de silicate d'aluminium est de 0,1 % en masse à 50 % en masse.

6. Matériau électroconducteur selon la revendication 4 ou 5, dans lequel une résistivité de poudre du composite de silicate d'aluminium est de 0,001 Ω·cm à 100Ω·cm.

7. Matériau électroconducteur selon l'une quelconque des revendications 4 à 6, dans lequel un rapport molaire d'élément Si/AI, entre le silicium (Si) et l'aluminium (Al), du composite de silicate d'aluminium est de 0,1 à 500.

8. Matériau électroconducteur pour une batterie rechargeable au lithium-ion, le matériau électroconducteur comprenant un composite de silicate d'aluminium qui comprend un silicate d'aluminium et du carbone qui est disposé sur une surface du silicate d'aluminium, dans lequel le composite de silicate d'aluminium a une valeur R de 0,3 à 3,0, la valeur R étant un rapport d'intensité Id/Ig (D/G) où Id fait référence à une intensité d'un pic qui apparaît à approximativement 1360 cm⁻¹ et Ig fait référence à une intensité d'un pic qui apparaît à approximativement 1580 cm⁻¹ dans un spectre Raman obtenu par spectrométrie Raman au laser avec une longueur d'onde d'excitation de 532 nm.

9. Matériau électroconducteur pour une batterie rechargeable au lithium-ion selon la revendication 8, dans lequel une teneur du carbone dans le composite de silicate d'aluminium est de 0,1 % en masse à 50 % en masse.

10. Matériau électroconducteur pour une batterie rechargeable au lithium-ion selon la revendication 8 ou 9, dans lequel une résistivité de poudre du composite de silicate d'aluminium est de 0,001 Ω·cm à 100 Ω·cm.

11. Matériau électroconducteur pour une batterie rechargeable au lithium-ion selon l'une quelconque des revendications 8 à 10, dans lequel un rapport molaire d'élément Si/AI, entre le silicium (Si) et l'aluminium (Al), du composite de silicate d'aluminium est de 0,1 à 500.

12. Composition pour former une électrode négative pour une batterie rechargeable au lithium-ion, la composition comprenant le matériau électroconducteur pour une batterie rechargeable au lithium-ion selon l'une quelconque des revendications 8 à 11, un matériau actif d'électrode négative, et un liant.

13. Composition pour former une électrode positive pour une batterie rechargeable au lithium-ion, la composition comprenant le matériau électroconducteur pour une batterie rechargeable au lithium-ion selon l'une quelconque des revendications 8 à 11, un matériau actif d'électrode positive, et un liant.

14. Électrode négative pour une batterie rechargeable au lithium-ion, l'électrode négative comprenant un collecteur de courant et une couche d'électrode négative qui est disposée sur le collecteur de courant, la couche d'électrode négative comprenant le matériau électroconducteur pour une batterie rechargeable au lithium-ion selon l'une quelconque des revendications 8 à 11 et un matériau actif d'électrode négative.

15. Électrode positive pour une batterie rechargeable au lithium-ion, l'électrode positive comprenant un collecteur de courant et une couche d'électrode positive qui est disposée sur le collecteur de courant, la couche d'électrode positive comprenant le matériau électroconducteur pour une batterie rechargeable au lithium-ion selon l'une quelconque des revendications 8 à 11 et un matériau actif d'électrode positive.

16. Batterie rechargeable au lithium-ion qui comprend au moins une de l'électrode négative pour une batterie rechargeable au lithium-ion selon la revendication 14 ou de l'électrode positive pour une batterie rechargeable au lithium-ion selon la revendication 15.
